# EUROPEAN PATENT APPLICATION

(11) **EP 2 573 148 A1**
(43) Date of publication of application: **27.03.2013**
(21) Application number: 11783254.3
(22) Date of filing: 16.05.2011
(51) Int. Cl.: C09D 163/00, C09D 5/03, C09D 7/12, C09D 167/00

(54) **CURABLE POWDER COATING COMPOSITION, AND CURED PRODUCT OF SAME**

(30) Priority: 28.01.2011 JP 2011016790; 28.01.2011 JP 2011016599; 21.05.2010 JP 2010116957
(71) Applicant: Nippon Soda Co., Ltd., Tokyo 100-8165 (JP)
(72) Inventor: ONO, Kazuo, Ichihara-shi Chiba 290-0045 (JP); KAMEGAYA, Naoyuki, Ichihara-shi Chiba 290-0045 (JP); AMAIKE, Masato, Ichihara-shi Chiba 290-0045 (JP)
(74) Representative: Wibbelmann, Jobst
(86) International application number: PCT/JP2011/002698
(87) International publication number: WO 2011/145317

(57) **Abstract**

Disclosed is an epoxy or epoxy-polyester curable powder coating composition which can form a favorable cured coating film excellent in adhesion and solvent resistance and is excellent in storage stability. The curable powder coating composition of the present invention contains the following component (A) and component (B): (A) an epoxy resin or an epoxy-polyester hybrid resin; and (B) a clathrate complex which contains (b1) at least one selected from the group consisting of a carboxylic acid compound and a tetrakisphenol compound represented by the following formula (I), and (b2) at least one selected from compounds represented by formula (II). The carboxylic acid compound preferably includes an aromatic carboxylic acid.

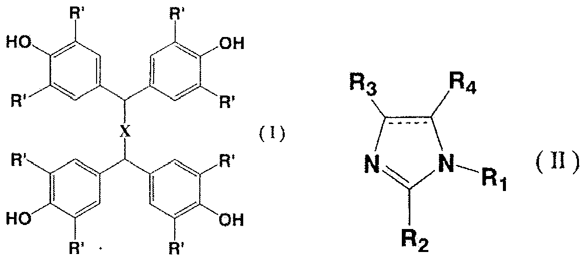

## Description

### Technical Field

The present invention relates to a curable powder coating composition containing an epoxy resin or an epoxy-polyester hybrid resin and a clathrate of a carboxylic acid compound and an imidazole compound or an imidazoline compound, and to a cured product thereof.
The present application claims priority to Japanese Patent Application No. 2010-116957 filed on May 21, 2010, Japanese Patent Application No. 2011-016599 filed on January 28, 2011, and Japanese Patent Application No. 2011-016790 filed on January 28, 2011, the contents of which are incorporated herein by reference.

### Background Art

A coating method using a powder coating for the coating of household electrical appliances, building materials, automobile parts, and the like has been known. The demand of the powder coating has grown in recent years because, as compared with conventional solvent type coatings, it is environmentally friendly because a solvent is not used; a step of drying a coating film is not required; the coating cost can be reduced by the reuse of recovered powder; and a cured film excellent in mechanical strength, chemical resistance, corrosion resistance, weatherability, and the like is obtained.

Examples of the powder coating include an epoxy powder coating, a polyester powder coating, an acrylic powder coating, and an epoxy-polyester powder coating. Among these, the epoxy powder coating is frequently used for the coating of machine parts and water pipes, and the like because it is excellent in adhesiveness, anti-corrosiveness and mechanical properties. Further, the epoxy-polyester powder coating is frequently used for the decorative coating of steel furniture, household electrical appliances, and the like because it can obtain a matte cured coating film excellent in corrosion resistance and designability.

When an epoxy or epoxy-polyester powder coating is used for the coating, curing temperature must be set at a high temperature in order to obtain a favorable cured coating film. Therefore, a material to be coated has been limited to a heat-resistant material such as metal. Accordingly, a method of obtaining a cured coating film at a low curing temperature by using a highly active curing agent such as an alkylimidazole compound has been developed. However, a powder coating containing a highly active curing agent has posed a problem because the curing reaction of the powder coating may gradually proceed also during storage, reducing the storage stability of the powder coating.
Thus, an epoxy or epoxy-polyester powder coating which can obtain a favorable cured coating film at a low curing temperature and is excellent in storage stability has been demanded, and a method of using a clathrate complex containing a curing agent as a guest compound has been developed.
Patent Documents 1 and 2 describe an epoxy coating prepared by adding, to an epoxy resin, a clathrate complex containing a tetrakisphenol compound as a host compound and a curing agent and/or a catalyst as a guest compound. However, Patent Document 1 relates to an organic solvent type coating, and Patent Document 2 does not provide the evaluation as a coating and has not at all described that it is usable as a coating.

Further, Patent Document 3 describes an epoxy-polyester powder coating composition containing a clathrate complex containing an epoxy resin, a polyester resin, and a multimolecular host compound as a host compound and a curing agent as a guest compound. As a multimolecular host compound, here are illustrated, in addition to the above tetrakisphenol compound, a compound having one aromatic group and one hydroxyl group in the molecule such as phenol, o-chlorophenol, 2,4,6-trichlorophenol, p-chlorophenol, o-nitrophenol, p-nitrophenol, 2,4-dinitrophenol, 2,6-dinitrophenol, 2,4,6-trinitrophenol, p-t-butylphenol, and p-t-octylphenol;
a compound having one aromatic group and two hydroxyl groups in the molecule such as t-butylhydroquinone and 2,5-di-t-butylhydroquinone;
α,α,α',α'-tetraphenyl-1,1'-biphenyl-2,2'-dimethanol, 4,4'-cyclohexylidene bisphenol, 4,4'-methylenebisphenol, 4,4'-ethylidenebisphenol, 5,5'-methylenedisalicylic acid, 1,1,6,6-tetraphenyl-2,4-hexadiyne-1,6-diol, 1,1,4,4-tetraphenyl-2-butyne-1,4-diol, 1,1,2,2-tetraphenylethane-1,2-diol, and 1,1,6,6-tetrakis(2,4-dimethylphenyl)-2,4-hexadiyne-1,6-diol;
a hydroxy benzophenone compound such as 4,4'-dihydroxybenzophenone, 2,4'-dihydroxybenzophenone, 4,4'-dihydroxy-2-methylbenzophenone, 4,4',3,2'-tetrahydroxybenzophenone, 2,3,4,4'-tetrahydroxybenzophenone, 2,2',4,4'-tetrahydroxy-3,3'-dimethylbenzophenone, 2,2',4,4'-tetrahydroxy-3,3'-dichlorobenzophenone, and 2,2',4,4'-tetrahydroxy-3,3'-dimethoxybenzophenone;
a tetrakisphenol compound; and
1,4-diazabicyclo-[2.2.2]-octane, granular cornstarch (Porous Y-20), 5,5-dimethylhydantoin, N-phenylmaleimide, 9,9'-bianthracene, and the like.

However, in the powder coating containing the above tetrakisphenol compound as a host compound, the evaluation of the physical properties thereof is limited; and, conventionally, when a clathrate complex containing a curing agent as a guest compound is used in an epoxy or epoxy-polyester powder coating, there is no example in which the physical properties of the powder coating containing a carboxylic acid compound as a host compound have been evaluated in detail.
Patent Document 4 describes an epoxy resin powder coating composition containing an epoxy resin, an imidazole curing agent, and an acid, wherein it is described that the composition has low-temperature curability. However, the state of the surface of the cured product is not described, but only the curing at low temperatures is described therein.
Patent Document 5 describes an epoxy resin powder coating containing an epoxy resin, an imidazole curing agent, and an inorganic filler, wherein it describes that the powder coating has characteristics such as low-temperature curability and storage stability and further describes that smoothness is not reduced by specifying the upper limit amount of the inorganic filler. However, the powder coating is not characterized by the composition of the epoxy resin and the curing catalyst because the smoothness is influenced by the inorganic filler.
Patent Document 6 describes an epoxy resin powder coating containing an epoxy resin, imidazole, and monocarboxylic acid, wherein it is described that the pot life is improved. However, for example, the storage stability (the rate of change in gel time after storing at 40°C for 10 days) is an insufficient value because the imidazole and monocarboxylic acid are not contained as a clathrate complex.

### Prior Art Documents

### Patent Documents

Patent Document 1: Japanese unexamined Patent Application Publication No. 10-324826
Patent Document 2: Japanese unexamined Patent Application Publication No. 11-071449
Patent Document 3: Japanese unexamined Patent Application Publication No. 2006-16542
Patent Document 4: Japanese unexamined Patent Application Publication No. 2002-275410
Patent Document 5: Japanese unexamined Patent Application Publication No. 2004-2713
Patent Document 6: Japanese unexamined Patent Application Publication No. 10-204330

### Summary of the Invention

### Objects to be solved by the Invention

The present invention has been made in view of the actual circumstances of the prior art as described above, and it is an object of the present invention to provide an epoxy or epoxy-polyester curable powder coating composition which can form a favorable cured coating film excellent in adhesion and solvent resistance and is excellent in storage stability.

### Means to Solve the Object

As a result of extensive studies to solve the above object, the present inventors have found that a powder coating composition containing an epoxy resin or an epoxy-polyester hybrid resin and a clathrate complex which contains a carboxylic acid compound or a tetrakisphenol compound as a host compound and an imidazole or imidazoline compound as a guest compound can form a favorable cured coating film excellent in adhesion and solvent resistance and is excellent in storage stability. These findings have led to the completion of the present invention.

Specifically, the present invention relates to:
(1) A curable powder coating composition containing the following components (A) and (B):
   (A) an epoxy resin or an epoxy-polyester hybrid resin; and
   (B) a clathrate complex which contains (b1) at least one selected from the group consisting of a carboxylic acid compound and a tetrakisphenol compound represented by the following formula (I):

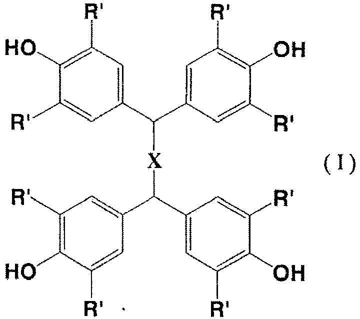

(wherein X represents (CH₂)ₙ, n representing 0, 1, 2, or 3; and R' each independently represents a hydrogen atom, a C1-C6 alkyl group, a phenyl group which optionally has a substituent, a halogen atom, or a C1-C6 alkoxy group) and (b2) at least one selected from compounds represented by formula (II):

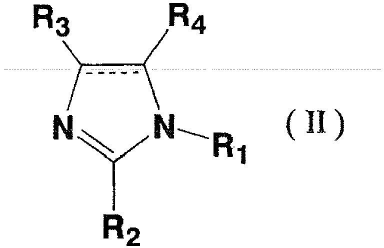

(wherein R₁ represents a hydrogen atom, a C1-C10 alkyl group, an aryl group, an arylalkyl group, or a cyanoethyl group; R₂ to R₄ each represent a hydrogen atom, a nitro group, a halogen atom, a C1-C20 alkyl group, a C1-C20 alkyl group substituted with a hydroxy group, an aryl group, an arylalkyl group, or a C1-C20 acyl group; and a dashed line part represents a single bond or a double bond);
(2) The curable powder coating composition according to the above (1), wherein the carboxylic acid compound in (b1) is an aromatic carboxylic acid compound;
(3) The curable powder coating composition according to the above (2), wherein the aromatic carboxylic acid compound is an isophthalic acid compound represented by formula (III):

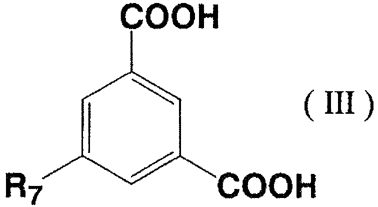

(wherein R₇ represents a C1-C6 alkyl group, a C1-C6 alkoxy group, a nitro group, or a hydroxy group);
(4) The curable powder coating composition according to the above (3), wherein the isophthalic acid compound is 5-t-butyl isophthalic acid, 5-nitroisophthalic acid, or 5-hydroxyisophthalic acid; and
(5) The curable powder coating composition according to any one of the above (1) to (4), wherein the imidazole compound or the imidazoline compound represented by formula (II) represents imidazole, 2-ethyl-4-methylimidazole, 1-methylimidazole, 2-methylimidazole, 4-methylimidazole, 1,2-dimethylimidazole, 1-benzyl-2-methylimidazole, 2-heptadecylimidazole, 2-undecylimidazole, 2-phenylimidazole, 2-phenyl-4-methyl-5-hydroxymethylimidazole, 2-methylimidazoline or 2-phenylimidazoline; and
(6) A cured product of the curable powder coating composition according to any one of the above (1) to (5).

### Mode of Carrying Out the Invention

### 1 Curable Powder Coating Composition

The curable powder coating composition of the present invention contains the following components.
(A) an epoxy resin or an epoxy-polyester hybrid resin
(B) a clathrate complex which contains at least one selected from the group consisting of a carboxylic acid compound and a tetrakisphenol compound represented by the following formula (I):

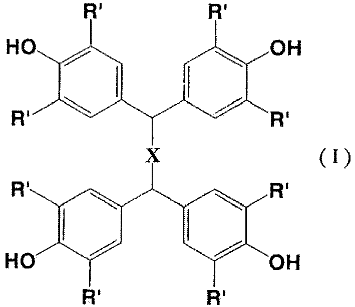

(wherein X represents (CH₂)ₙ, n representing 0, 1, 2, or 3; and R' each independently represents a hydrogen atom, a C1-C6 alkyl group, a phenyl group which optionally has a substituent, a halogen atom, or a C1-C6 alkoxy group) and at least one selected from compounds represented by the following formula (II):

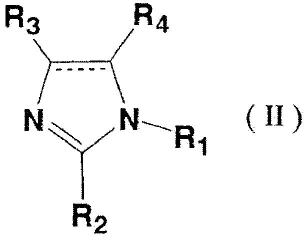

(wherein R₁ represents a hydrogen atom, a C1-C10 alkyl group, an aryl group, an arylalkyl group, or a cyanoethyl group; R₂ to R₄ each represent a hydrogen atom, a nitro group, a halogen atom, a C1-C20 alkyl group, a C1-C20 alkyl group substituted with a hydroxy group, an aryl group, an arylalkyl group, or a C1-C20 acyl group; and a part to which a dashed line is attached represents a single bond or a double bond).
Hereinafter, each component will be described in detail.

### (Clathrate Complex)

The clathrate complex of the present invention is not particularly limited as long as it is a clathrate complex which contains a carboxylic acid compound or a tetrakisphenol compound represented by formula (I) as a host compound and contains a compound represented by formula (II) as a guest compound, and it may also comprise a third component such as a solvent. In the present invention, the clathrate complex refers to a compound, more preferably a crystalline compound, in which a host compound forms an inclusion lattice, and the host compound is combined with a guest compound by a bond other than a covalent bond. The clathrate complex of the present invention comprising a carboxylic acid compound or a tetrakisphenol compound represented by formula (I) and a compound represented by formula (II) can also be referred to as a salt formed from the carboxylic acid compound or the tetrakisphenol compound represented by formula (I) and the compound represented by formula (II).
The blending ratio of the clathrate complex in the curable powder coating composition of the present invention is preferably 0.01 to 1.0 mol relative to 1 mol of the epoxy ring of an epoxy resin, in terms of the imidazole compound or imidazoline compound represented by formula (II) in the clathrate complex.

### (Carboxylic Acid Compound)

The carboxylic acid compound used in the present invention is not particularly limited as long as it can form a clathrate complex with an imidazole compound or an imidazoline compound represented by formula (II), and the carboxylic acid compound can be represented by formula (IV):

R(COOH)ₙ₁ (IV).

The group R in formula (IV) will be described below; the group R will be indicated by the name of a monovalent group to which one carboxyl group is bonded. For a polyvalent carboxylic acid, the group R can be illustrated by a name suitably applied.
In the formula, R represents an aliphatic hydrocarbon group that optionally has a substituent, an alicyclic hydrocarbon group that optionally has a substituent, an aromatic hydrocarbon group that optionally has a substituent, or a heterocyclic group that optionally has a substituent, and n1 represents any integer of 1 to 4.

The "aliphatic hydrocarbon group" encompasses an alkyl group, an alkenyl group and an alkynyl group.
Examples of the "alkyl group" include a methyl group, an ethyl group, a n-propyl group, an i-propyl group, a n-butyl group, a s-butyl group, an i-butyl group, a t-butyl group, a n-pentyl group, a n-hexyl group, a nonyl group, an i-nonyl group, a decyl group, a lauryl group, a tridecyl group, a myristyl group, a pentadecyl group, a palmityl group, a heptadecyl group, and a stearyl group. A C1-C6 alkyl group is preferred.
Examples of the "alkenyl group" include a vinyl group, a 1-propenyl group, a 2-propenyl group, a 1-butenyl group, a 2-butenyl group, a 3-butenyl group, a 1-methyl-2-propenyl group, a 2-methyl-2-propenyl group, a 1-pentenyl group, a 2-pentenyl group, a 3-pentenyl group, a 4-pentenyl group, a 1-methyl-2-butenyl group, a 2-methyl-2-butenyl group, a 1-hexenyl group, a 2-hexenyl group, a 3-hexenyl group, a 4-hexenyl group, a 5-hexenyl group, a heptenyl group, an octenyl group, a decenyl group, a pentadecenyl group, an eicosenyl group, and a tricosenyl group. A C2-C6 alkenyl group is preferred.
Examples of the "alkynyl group" include an ethynyl group, a 1-propynyl group, a 2-propynyl group, a 1-butynyl group, a 2-butynyl group, a 3-butynyl group, a 1-methyl-2-propynyl group, a 2-methyl-2-propynyl group, a 1-pentynyl group, a 2-pentynyl group, a 3-pentynyl group, a 4-pentynyl group, a 1-methyl-2-butynyl group, a 2-methyl-2-butynyl group, a 1-hexynyl group, a 2-hexynyl group, a 3-hexynyl group, a 4-hexynyl group, a 5-hexynyl group, a 1-heptynyl group, a 1-octynyl group, a 1-decynyl group, a 1-pentadecynyl group, a 1-eicosynyl group, and a 1-tricosynyl group. A C2-C6 alkynyl group is preferred.

The "alicyclic hydrocarbon group" refers to a monocyclic or polycyclic alkyl group, alkenyl group, and the like, and examples thereof include a cyclopropyl group, a cyclobutyl group, a cyclopentyl group, a cyclohexyl group, a cycloheptyl group, a cyclooctyl group, a cyclododecyl group, a bicyclooctyl group, a bicycloheptyl group, a norbornyl group, an adamantyl group, a 2-cyclopropenyl group, a 2-cyclopentenyl group, and a 4-cyclohexenyl group. A C3-C8 cycloalkyl group is preferred.

The "aromatic hydrocarbon group" means a monocyclic or polycyclic aryl group. Here, in the case of a polycyclic aryl group, the aromatic hydrocarbon group also encompasses a partially saturated group in addition to a fully unsaturated group. Examples thereof include a phenyl group, a naphthyl group, an azulenyl group, an indenyl group, an indanyl group, and a tetralinyl group. A C6-C10 aryl group is preferred.

The "heterocyclic group" means a 5- to 7-membered aromatic heterocycle, saturated heterocycle or unsaturated heterocycle having 1 to 4 nitrogen atoms, oxygen atoms or sulfur atoms as a hetero atom(s), or a condensed heterocycle in which any of these heterocycles is condensed with a benzene ring. Examples thereof include a furan-2-yl group, a furan-3-yl group, a thiophen-2-yl group, a thiophen-3-yl group, a pyrrol-1-yl group, a pyrrol-2-yl group, a pyridin-2-yl group, a pyridin-3-yl group, a pyridin-4-yl group, a pyrazin-2-yl group, a pyrazin-3-yl group, a pyrimidin-2-yl group, a pyrimidin-4-yl group, a pyridazin-3-yl group, a pyridazin-4-yl group, a 1,3-benzodioxol-4-yl group, a 1,3-benzodioxol-5-yl group, a 1,4-benzodioxan-5-yl group, a 1,4-benzodioxan-6-yl group, a 3,4-dihydro-2H-1,5-benzodioxepin-6-yl group, a 3,4-dihydro-2H-1,5-benzodioxepin-7-yl group, a 2,3-dihydrobenzofuran-4-yl group, a 2,3-dihydrobenzofuran-5-yl group, a 2,3-dihydrobenzofuran-6-yl group, a 2,3-dihydrobenzofuran-7-yl group, a benzofuran-2-yl group, a benzofuran-3-yl group, a benzothiophen-2-yl group, a benzothiophen-3-yl group, a quinoxalin-2-yl group, a quinoxalin-5-yl group, an indol-1-yl group, an indol-2-yl group, an isoindol-1-yl group, an isoindol-2-yl group, an isobenzofuran-1-yl group, an isobenzofuran-4-yl group, a chromen-2-yl group, a chromen-3-yl group, an imidazol-1-yl group, an imidazol-2-yl group, an imidazol-4-yl group, a pyrazol-1-yl group, a pyrazol-3-yl group, a thiazol-2-yl group, a thiazol-4-yl group, an oxazol-2-yl group, an oxazol-4-yl group, an isoxazol-3-yl group, an isoxazol-4-yl group, a pyrrolidin-2-yl group, a pyrrolidin-3-yl group, a benzoimidazol-1-yl group, a benzoimidazol-2-yl group, a benzothiazol-2-yl group, a benzothiazol-4-yl group, a benzoxazol-2-yl group, a benzoxazol-4-yl group, a quinolin-2-yl group, a quinolin-3-yl group, an isoquinolin-1-yl group, an isoquinolin-3-yl group, a 1,3,4-thiadiazol-2-yl group, a 1,2,3-triazol-1-yl group, a 1,2,3-triazol-4-yl group, a tetrazol-1-yl group, a tetrazol-2-yl group, an indolin-4-yl group, an indolin-5-yl group, a morpholin-4-yl group, a piperazin-2-yl group, a piperidin-2-yl group, a 1,2,3,4-tetrahydroquinolin-5-yl group, a 1,2,3,4-tetrahydroquinolin-6-yl group, a 1,2,3,4-tetrahydroisoquinolin-5-yl group, and a 1,2,3,4-tetrahydroisoquinolin-6-yl group.

Examples of the substituent in "that optionally has a substituent" include a C1-C6 alkyl group, a C1-C6 alkoxy group, a nitro group, a hydroxy group, or a group represented by the following formula:

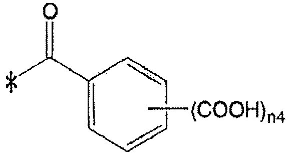

(wherein n4 represents an integer of 1 or 2, and * represents a bonding position).

Specific examples of the carboxylic acid compounds include the following compounds.
The aliphatic carboxylic acids preferably include an aliphatic di- to tetra-valent carboxylic acid and a hydroxy aliphatic polyvalent carboxylic acid. Representative examples thereof can include fumaric acid, 1,3-cyclohexanedicarboxylic acid, trans-1,4-cyclohexanedicarboxylic acid, succinic acid, malonic acid, tartaric acid, maleic acid, citric acid, malic acid, and adipic acid. These aliphatic carboxylic acids may be used alone or in combination of two or more thereof.

Examples of the aromatic carboxylic acid compounds include the following compounds:
benzoic acid compounds such as benzoic acid, 2-methylbenzoic acid, 3-methylbenzoic acid, 4-methylbenzoic acid, 2-ethylbenzoic acid, 3-ethylbenzoic acid, 4-ethylbenzoic acid, 2-n-propylbenzoic acid, 3-n-propylbenzoic acid, 4-n-propylbenzoic acid, 2-butylbenzoic acid, 3-butylbenzoic acid, 4-butylbenzoic acid, 2-i-propylbenzoic acid, 3-i-propylbenzoic acid, 4-i-propylbenzoic acid, 2-i-butylbenzoic acid, 3-i-butylbenzoic acid, 4-i-butylbenzoic acid, 2-hydroxybenzoic acid, 3-hydroxybenzoic acid, 4-hydroxybenzoic acid, 4-isopropylbenzoic acid, 2-nitrobenzoic acid, 3-nitrobenzoic acid, 4-nitrobenzoic acid, methyl 2-nitrobenzoate, methyl 3-nitrobenzoate, methyl 4-nitrobenzoate, ethyl 2-nitrobenzoate, ethyl 3-nitrobenzoate, ethyl 4-nitrobenzoate, propyl 2-nitrobenzoate, propyl 3-nitrobenzoate, propyl 4-nitrobenzoate, butyl 2-nitrobenzoate, butyl 3-nitrobenzoate, butyl 4-nitrobenzoate, 2,3-dimethylbenzoic acid, 2,4-dimethylbenzoic acid, 2,5-dimethylbenzoic acid, 2,6-dimethylbenzoic acid, 3,4-dimethylbenzoic acid, 3,5-dimethylbenzoic acid, 2,3,4-trimethyl benzoic acid, 2,3,5-trimethyl benzoic acid, 2,4,5-trimethyl benzoic acid, 2,4,6-trimethyl benzoic acid, 3,4,5-trimethyl benzoic acid, 3,6-dimethylbenzoic acid, 4,5-dimethylbenzoic acid, 4,6-dimethylbenzoic acid, 2,3-diethylbenzoic acid, 2,4-diethylbenzoic acid, 2,5-diethylbenzoic acid, 2,6-diethylbenzoic acid, 3,4-diethylbenzoic acid, 3,5-diethylbenzoic acid, 3,6-diethylbenzoic acid, 4,5-diethylbenzoic acid, 4,6-diethylbenzoic acid, 2,3-dihydroxybenzoic acid, 2,4-dihydroxybenzoic acid, 2,5-dihydroxybenzoic acid, 2,6-dihydroxybenzoic acid, 3,4-dihydroxybenzoic acid, 3,5-dihydroxybenzoic acid, 3,6-dihydroxybenzoic acid, 4,5-dihydroxybenzoic acid, 4,6-dihydroxybenzoic acid, 2-hydroxy-3-methylbenzoic acid, 2-hydroxy-4-methylbenzoic acid, 2-hydroxy-5-methylbenzoic acid, 4-hydroxy-3-methoxybenzoic acid, 3-hydroxy-4-methoxybenzoic acid, 3, 4-dimethoxybenzoic acid, 2,4-dimethoxybenzoic acid, 2,4-dihydroxy-6-methylbenzoic acid, 3,4,5-trihydroxybenzoic acid, 4-hydroxy-3,5-dimethoxybenzoic acid, 2,4,5-trimethoxybenzoic acid, 2-(carboxymethyl)benzoic acid, 3-(carboxymethyl)benzoic acid, 4-(carboxymethyl)benzoic acid, 2-(carboxycarbonyl)benzoic acid, 3-(carboxycarbonyl)benzoic acid, and 4-(carboxycarbonyl)benzoic acid;

phthalic acid compounds such as phthalic acid, 3-methylphthalic acid, 4-methylphthalic acid, 5-methylphthalic acid, 6-methylphthalic acid, 3-ethylphthalic acid, 4-ethylphthalic acid, 5-ethylphthalic acid, 6-ethylphthalic acid, 3-n-propylphthalic acid, 4-n-propylphthalic acid, 5-n-propylphthalic acid, 6-n-propylphthalic acid, 3-butylphthalic acid, 4-butylphthalic acid, 5-butylphthalic acid, 6-butylphthalic acid, 3-i-propylphthalic acid, 4-i-propylphthalic acid, 5-i-propylphthalic acid, 6-i-propylphthalic acid, 3-i-butylphthalic acid, 4-i-butylphthalic acid, 5-i-butylphthalic acid, 6-i-butylphthalic acid, 3-hydroxyphthalic acid, 4-hydroxyphthalic acid, 5-hydroxyphthalic acid, 6-hydroxyphthalic acid, 3,4-dihydroxyphthalic acid, 3,5-dihydroxyphthalic acid, 3,6-dihydroxyphthalic acid, 4,5-dihydroxyphthalic acid, 4,6-dihydroxyphthalic acid, 2,3-dimethoxyphthalic acid, 4,5-dimethoxyphthalic acid, 3-nitrophthalic acid, 4-nitrophthalic acid, 5-nitrophthalic acid, 6-nitrophthalic acid, 3,4-dimethylphthalic acid, 3,5-dimethylphthalic acid, 3,6-dimethylphthalic acid, 4,5-dimethylphthalic acid, and 4,6-dimethylphthalic acid;

isophthalic acid compounds such as isophthalic acid, 2-methylisophthalic acid, 4-methylisophthalic acid, 5-methylisophthalic acid, 6-methylisophthalic acid, 2-ethylisophthalic acid, 4-ethylisophthalic acid, 5-ethylisophthalic acid, 6-ethylisophthalic acid, 2-n-propylisophthalic acid, 4-n-propylisophthalic acid, 5-n-propylisophthalic acid, 6-n-propylisophthalic acid, 2-isopropylisophthalic acid, 4-isopropylisophthalic acid, 5-isopropylisophthalic acid, 6-isopropylisophthalic acid, 2-butylisophthalic acid, 4-butylisophthalic acid, 5-butylisophthalic acid, 6-butylisophthalic acid, 2-isobutylisophthalic acid, 4-isobutylisophthalic acid, 5-isobutylisophthalic acid, 6-isobutylisophthalic acid, 4-t-butylisophthalic acid, 5-t-butylisophthalic acid, 6-t-butylisophthalic acid, 2-hydroxyisophthalic acid, 4-hydroxyisophthalic acid, 5-hydroxyisophthalic acid, 6-hydroxyisophthalic acid, 2,4-dihydroxyisophthalic acid, 2,5-dihydroxyisophthalic acid, 2,6-dihydroxyisophthalic acid, 4,5-dihydroxyisophthalic acid, 4,6-dihydroxyisophthalic acid, 5,6-dihydroxyisophthalic acid, 2,4-dimethylisophthalic acid, 2,5-dimethylisophthalic acid, 2,6-dimethylisophthalic acid, 4,5-dimethylisophthalic acid, 4,6-dimethylisophthalic acid, 5,6-dimethylisophthalic acid, 2-nitroisophthalic acid, 4-nitroisophthalic acid, 5-nitroisophthalic acid, and 6-nitroisophthalic acid;
terephthalic acid compounds such as terephthalic acid, 2-methylterephthalic acid, 2-ethylterephthalic acid, 2-n-propylterephthalic acid, 2-isopropylterephthalic acid, 2-butylterephthalic acid, 2-isobutylterephthalic acid, 2-hydroxyterephthalic acid, 2,6-dihydroxyterephthalic acid, 2,6-dimethylterephthalic acid, and 2-nitroterephthalic acid;
benzenetricarboxylic acid compounds such as 1,2,3-benzenetricarboxylic acid, 1,2,4-benzenetricarboxylic acid (trimellitic acid), 1,2,5-benzenetricarboxylic acid, 1,3,4-benzenetricarboxylic acid, 1,3,5-benzenetricarboxylic acid (trimesic acid), 4-hydroxy-1,2,3-benzenetricarboxylic acid, 5-hydroxy-1,2,3-benzenetricarboxylic acid, 3-hydroxy-1,2,4-benzenetricarboxylic acid, 5-hydroxy-1,2,4-benzenetricarboxylic acid, and 6-hydroxy-1,2,4-benzenetricarboxylic acid;
tetracarboxylic acid compounds such as 1,2,3,4-benzenetetracarboxylic acid, 1,2,3,5-benzenetetracarboxylic acid, and 1,2,4,5-benzenetetracarboxylic acid (pyromellitic acid);
benzenehexacarboxylic acid;

naphthoic acid compounds such as 1-naphthoic acid, 2-naphthoic acid, 2-methyl-1-naphthoic acid, 3-methyl-1-naphthoic acid, 4-methyl-1-naphthoic acid, 5-methyl-1-naphthoic acid, 6-methyl-1-naphthoic acid, 7-methyl-1-naphthoic acid, 8-methyl-1-naphthoic acid, 1-methyl-2-naphthoic acid, 3-methyl-2-naphthoic acid, 4-methyl-2-naphthoic acid, 5-methyl-2-naphthoic acid, 6-methyl-2-naphthoic acid, 7-methyl-2-naphthoic acid, 8-methyl-2-naphthoic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,4-naphthalenedicarboxylic acid, 2,5-naphthalenedicarboxylic acid, 2,6-naphthalenedicarboxylic acid, 2,7-naphthalenedicarboxylic acid, 2,8-naphthalenedicarboxylic acid, 2-hydroxyl-1-naphthoic acid, 3-hydroxy-1-naphthoic acid, 4-hydroxy-1-naphthoic acid, 5-hydroxyl-1-naphthoic acid, 6-hydroxy-1-naphthoic acid, 7-hydroxy-1-naphthoic acid, 8-hydroxy-1-naphthoic acid, 1-hydroxy-2-naphthoic acid, 3-hydroxy-2-naphthoic acid, 4-hydroxy-2-naphthoic acid, 5-hydroxy-2-naphthoic acid, 6-hydroxy-2-naphthoic acid, 7-hydroxy-2-naphthoic acid, 8-hydroxy-2-naphthoic acid, 1,2,4,5-naphthalenetetracarboxylic acid, 2,3-dihydroxy-1-naphthoic acid, 2,4-dihydroxy-1-naphthoic acid, 2,5-dihydroxy-1-naphthoic acid, 2,6-dihydroxy-1-naphthoic acid, 2,7-dihydroxy-1-naphthoic acid, 2,8-dihydroxy-1-naphthoic acid, 3,4-dihydroxy-1-naphthoic acid, 3,5-dihydroxy-1-naphthoic acid, 3,6-dihydroxy-1-naphthoic acid, 3,7-dihydroxy-1-naphthoic acid, 3,8-dihydroxy-1-naphthoic acid, 4,5-dihydroxy-1-naphthoic acid, 4,6-dihydroxy-1-naphthoic acid, 4,7-dihydroxy-1-naphthoic acid, 4,8-dihydroxy-1-naphthoic acid, 5,6-dihydroxy-1-naphthoic acid, 5,7-dihydroxy-1-naphthoic acid, 5,8-dihydroxy-1-naphthoic acid, 6,7-dihydroxy-1-naphthoic acid, 6,8-dihydroxy-1-naphthoic acid, 7,8-dihydroxy-1-naphthoic acid, 1,3-dihydroxy-2-naphthoic acid, 1,4-dihydroxy-2-naphthoic acid, 1,5-dihydroxy-2-naphthoic acid, 1,6-dihydroxy-2-naphthoic acid, 1,7-dihydroxy-2-naphthoic acid, 1,8-dihydroxy-2-naphthoic acid, 3,4-dihydroxy-2-naphthoic acid, 3,5-dihydroxy-2-naphthoic acid, 3,6-dihydroxy-2-naphthoic acid, 3,8-dihydroxy-2-naphthoic acid, 4,5-dihydroxy-2-naphthoic acid, 4,6-dihydroxy-2-naphthoic acid, 4,7-dihydroxy-2-naphthoic acid, 4,8-dihydroxy-2-naphthoic acid, 5,6-dihydroxy-2-naphthoic acid, 5,7-dihydroxy-2-naphthoic acid, 5,8-dihydroxy-2-naphthoic acid, 6,7-dihydroxy-2-naphthoic acid, 6,8-dihydroxy-2-naphthoic acid, and 7,8-dihydroxy-2-naphthoic acid;
cyclohexanecarboxylic acid compounds such as cyclohexanecarboxylic acid, 1,2-cyclohexanedicarboxylic acid, 1,3-cyclohexanedicarboxylic acid, 1,4-cyclohexanedicarboxylic acid, and 1,1-cyclohexanedicarboxylic acid; and
naphthalenedicarboxylic acid compounds such as 1,2-decahydronaphthalenedicarboxylic acid, 1,3-decahydronaphthalenedicarboxylic acid, 1,4-decahydronaphthalenedicarboxylic 1,5-decahydronaphthalenedicarboxylic acid, 1,6-decahydronaphthalenedicarboxylic acid, 1,7-decahydronaphthalenedicarboxylic acid, and 1,8-decahydronaphthalenedicarboxylic acid.
These aromatic carboxylic acid compounds may be used alone or in combination of two or more thereof.

Examples of the heterocyclic carboxylic acid include furancarboxylic acid, thiophenecarboxylic acid, pyrrolecarboxylic acid, pyrazinecarboxylic acid, nicotinic acid, isonicotinic acid, and picolinic acid. These heterocyclic carboxylic acid compounds may be used alone or in combination of two or more thereof.

Among the above carboxylic acid derivatives, preferred is an aromatic (heterocyclic) carboxylic acid represented by the following formula (IV-1) or (IV-2):

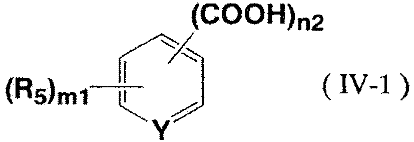

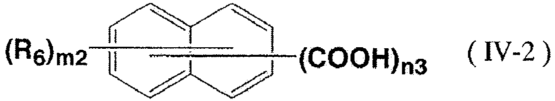

In the formula (IV-1) and formula (IV-2), R₅ represents a C1-C6 alkyl group, a C1-C6 alkoxy group, a nitro group, a hydroxy group, or a group represented by the following formula:

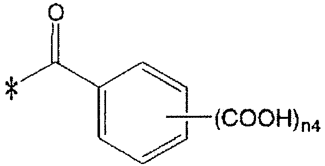

(wherein n4 represents an integer of 1 or 2, and * represents a bonding position); R₆ represents a C1-C6 alkyl group, a C1-C6 alkoxy group, a nitro group, or a hydroxy group; Y represents CH or a N atom; m1 represents any integer of 0 to 2; m2 represents any integer of 0 to 4; n2 represents any integer of 1 to 4; and n3 represents any integer of 1 to 4.

The C1-C6 alkyl group is preferably a C1-C4 alkyl group, and optionally has a substituent. Specific examples of the C1-C6 alkyl group can include a methyl group, an ethyl group, a propyl group, an i-propyl group, a cyclopropyl group, a butyl group, an i-butyl group, a s-butyl group, a t-butyl group, a cyclobutyl group, a cyclopropylmethyl group, a pentyl group, an i-pentyl group, a 2-methylbutyl group, a neopentyl group, a 1-ethylpropyl group, a hexyl group, an i-hexyl group, a 4-methylpentyl group, a 3-methylpentyl group, a 2-methylpentyl group, a 1-methylpentyl group, a 3,3-dimethylbutyl group, a 2,2-dimethylbutyl group, a 1,1-dimethylbutyl group, a 1,2-dimethylbutyl group, a 1,3-dimethylbutyl group, a 2,3-dimethylbutyl group, a 1-ethylbutyl group, and a 2-ethylbutyl group.

The C1-C6 alkoxy group is preferably a C1-C4 alkoxy group, and optionally has a substituent. Specific examples of the C1-C6 alkoxy group can include a methoxy group, an ethoxy group, a propoxy group, an i-propoxy group, a butoxy group, an i-butoxy group, a s-butoxy group, a t-butoxy group, a pentoxy group, an i-pentoxy group, a 2-methylbutoxy group, a 1-ethylpropoxy group, a 2-ethylpropoxy group, a neopentoxy group, a hexyloxy group, a 4-methylpentoxy group, a 3-methylpentoxy group, a 2-methylpentoxy group, a 3,3-dimethylbutoxy group, a 2,2-dimethylbutoxy group, a 1,1-dimethylbutoxy group, a 1,2-dimethylbutoxy group, a 1,3-dimethylbutoxy group, and a 2,3-dimethylbutoxy.

Among these, preferred is an isophthalic acid compound represented by formula (III):

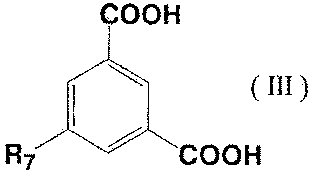

In the formula, R₇ represents a C1-C6 alkyl group, a C1-C6 alkoxy group, a nitro group, or a hydroxy group.
Examples of the C1-C6 alkyl group and the C1-C6 alkoxy group include the same groups as exemplified for R₅ and R₆ in formulae (IV-1) and (IV-2).
Specifically, the isophthalic acid compound represented by formula (IV-3) is preferably 5-hydroxyisophthalic acid or 5-nitroisophthalic acid.

### (Tetrakisphenol Compound)

The tetrakisphenol compound used in the present invention is a compound represented by general formula (I).

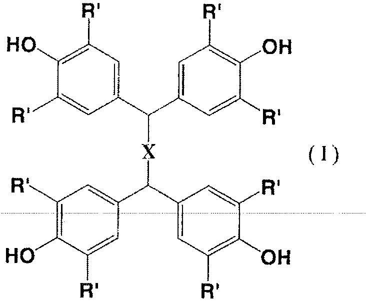

In the formula, X represents (CH₂)ₙ, n representing 0, 1, 2, or 3; and R' may be mutually the same or different from each other, and examples thereof can include a hydrogen atom, a C1-C6 lower alkyl group such as a methyl group, a propyl group, an i-propyl group, a n-butyl group, an i-butyl group, a t-butyl group, a n-hexyl group, and a cyclohexyl group, a phenyl group that may be substituted with a halogen atom, a lower alkyl group, and the like, a halogen atom such as a fluorine atom, a chlorine atom, a bromine atom, and an iodine atom, and a C1-C6 lower alkoxy group such as a methoxy group, an ethoxy group, and a t-butoxy group.

The tetrakisphenol used in the present invention is not particularly limited as long as it is a compound represented by general formula (I), and specific examples thereof can include 1,1,2,2-tetrakis(4-hydroxyphenyl)ethane, 1,1,2,2-tetrakis(3-methyl-4-hydroxyphenyl)ethane, 1,1,2,2-tetrakis(3,5-dimethyl-4-hydroxyphenyl)ethane, 1,1,2,2-tetrakis(3-chloro-4-hydroxyphenyl)ethane, 1,1,2,2-tetrakis(3,5-dichloro-4-hydroxyphenyl)ethane, 1,1,2,2-tetrakis(3-bromo-4-hydroxyphenyl)ethane, 1,1,2,2-tetrakis(3,5-dibromo-4-hydroxyphenyl)ethane, 1,1,2,2-tetrakis(3-t-butyl-4-hydroxyphenyl)ethane, 1,1,2,2-tetrakis(3,5-di-t-butyl-4-hydroxyphenyl)ethane, 1,1,2,2-tetrakis(3-fluoro-4-hydroxyphenyl)ethane, 1,1,2,2-tetrakis(3,5-difluoro-4-hydroxyphenyl)ethane, 1,1,2,2-tetrakis(3-methoxy-4-hydroxyphenyl)ethane, 1,1,2,2-tetrakis(3,5-dimethoxy-4-hydroxyphenyl)ethane, 1,1,2,2-tetrakis(3-chloro-5-methyl-4-hydroxyphenyl) ethane, 1,1,2,2-tetrakis(3-bromo-5-methyl-4-hydroxyphenyl)ethane, 1,1,2,2-tetrakis(3-methoxy-5-methyl-4-hydroxyphenyl) ethane, 1,1,2,2-tetrakis(3-t-butyl-5-methyl-4-hydroxyphenyl)ethane, 1,1,2,2-tetrakis(3-chloro-5-bromo-4-hydroxyphenyl) ethane, 1,1,2,2-tetrakis(3-chloro-5-phenyl-4-hydroxyphenyl)ethane, 1,1,2,2-tetrakis[(4-hydroxy-3-phenyl)phenyl]ethane, 1,1,3,3-tetrakis(4-hydroxyphenyl)propane, 1,1,3,3-tetrakis(3-methyl-4-hydroxyphenyl)propane, 1,1,3,3-tetrakis(3,5-dimethyl-4-hydroxyphenyl)propane, 1,1,3,3-tetrakis(3-chloro-4-hydroxyphenyl)propane, 1,1,3,3-tetrakis(3,5-dichloro-4-hydroxyphenyl)propane, 1,1,3,3-tetrakis(3-bromo-4-hydroxyphenyl)propane, 1,1,3,3-tetrakis(3,5-dibromo-4-hydroxyphenyl)propane, 1,1,3,3-tetrakis(3-phenyl-4-hydroxyphenyl)propane, 1,1,3,3-tetrakis(3,5-diphenyl-4-hydroxyphenyl)propane, 1,1,3,3-tetrakis(3-methoxy-4-hydroxyphenyl)propane, 1,1,3,3-tetrakis(3,5-dimethoxy-4-hydroxyphenyl)propane, 1,1,3,3-tetrakis(3-t-butyl-4-hydroxyphenyl)propane, 1,1,3,3-tetrakis(3,5-di-t-butyl-4-hydroxyphenyl)propane, 1,1,4,4-tetrakis(4-hydroxyphenyl)butane, 1,1,4,4-tetrakis(3-methyl-4-hydroxyphenyl)butane, 1,1,4,4-tetrakis(3,5-dimethyl-4-hydroxyphenyl)butane, 1,1,4,4-tetrakis(3-chloro-4-hydroxyphenyl)butane, 1,1,4,4-tetrakis(3,5-dichloro-4-hydroxyphenyl)butane, 1,1,4,4-tetrakis(3-methoxy-4-hydroxyphenyl)butane, 1,1,4,4-tetrakis(3,5-dimethoxy-4-hydroxyphenyl)butane, 1,1,4,4-tetrakis(3-bromo-4-hydroxyphenyl)butane, 1,1,4,4-tetrakis(3,5-dibromo-4-hydroxyphenyl)butane, 1,1,4,4-tetrakis(3-t-butyl-4-hydroxyphenyl)butane, and 1,1,4,4-tetrakis(3,5-di-t-butyl-4-hydroxyphenyl)butane. These tetrakisphenol compounds may be used alone or in combination of two or more thereof.

### (Compound Represented by Formula (II))

The compound represented by formula (II) used in the present invention is an imidazole compound or an imidazoline compound represented by the following formula.

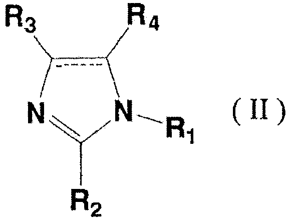

Specifically, formula (II) has a structure represented by the following:

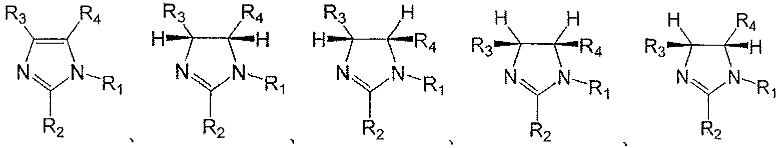

In the formula, R₁ represents a hydrogen atom, a C1-C10 alkyl group, an aryl group, an arylalkyl group, or a cyanoethyl group, and preferably represents a hydrogen atom.

The C1-C10 alkyl group is preferably a C1-C6 alkyl group, and optionally has a substituent. Specific examples of the C1-C10 alkyl group can include a methyl group, an ethyl group, a n-propyl group, an i-propyl group, a n-butyl group, a s-butyl group, an i-butyl group, a t-butyl group, a n-pentyl group, a n-hexyl group, a nonyl group, an i-nonyl group, and a decyl group.
The aryl group means a monocyclic or polycyclic aryl group. Here, in the case of a polycyclic aryl group, the aryl group also encompasses a partially saturated group in addition to a fully unsaturated group. Examples thereof include a phenyl group, a naphthyl group, an azulenyl group, an indenyl group, an indanyl group, and a tetralinyl group. Among these groups, a C6-C10 aryl group is preferred. Further, the aryl group optionally has a substituent.
The arylalkyl group is a group in which the aryl group and the alkyl group are combined with each other. Examples thereof include a benzyl group, a phenethyl group, 3-phenyl-n-propyl group, a 1-phenyl-n-hexyl group, a naphthalen-1-ylmethyl group, a naphthalen-2-ylethyl group, a 1-naphthalen-2-yl-n-propyl group, and an inden-1-ylmethyl group. Among these groups, a C6-C10 aryl/C1-C6 alkyl group is preferred. Further, the arylalkyl group optionally has a substituent.

R₂ to R₄ each independently represent a hydrogen atom, a nitro group, a halogen atom, a C1-C20 alkyl group, a C1-C20 alkyl group substituted with a hydroxy group, an aryl group, an arylalkyl group, or a C1-C20 acyl group.
Examples of the C1-C20 alkyl group include a methyl group, an ethyl group, a n-propyl group, an i-propyl group, a n-butyl group, a s-butyl group, an i-butyl group, a t-butyl group, a n-pentyl group, a n-hexyl group, a nonyl group, an i-nonyl group, a decyl group, a lauryl group, a tridecyl group, a myristyl group, a pentadecyl group, a palmityl group, a heptadecyl group, and a stearyl group. A C1-C10 alkyl group is preferred.
The aryl group and the arylalkyl group include the same groups as the groups for R₁.
The C1-C20 acyl group means a group in which a hydrogen atom, an alkyl group, an alkenyl group, an alkynyl group, an aryl group, a heteroaryl group, or the like is combined with a carbonyl group. Examples of the acyl group include a formyl group; alkylcarbonyl groups such as an acetyl group, a propionyl group, a butyroyl group, a pentanoyl group, a hexanoyl group, a heptanoyl group, an octanoyl group, a nonanoyl group, a decanoyl group, a 3-methylnonanoyl group, an 8-methylnonanoyl group, a 3-ethyloctanoyl group, a 3,7-dimethyloctanoyl group, an undecanoyl group, a dodecanoyl group, a tridecanoyl group, a tetradecanoyl group, a pentadecanoyl group, a hexadecanoyl group, a 1-methylpentadecanoyl group, a 14-methylpentadecanoyl group, a 13,13-dimethyltetradecanoyl group, a heptadecanoyl group, a 15-methylhexadecanoyl group, an octadecanoyl group, a 1-methylheptadecanoyl group, a nonadecanoyl group, an eicosanoyl group, and a heneicosanoyl group; alkenylcarbonyl groups such as an acryloyl group, a methacryloyl group, an allylcarbonyl group, and a cinnamoyl group; alkynylcarbonyl groups such as an ethynylcarbonyl group and a propynylcarbonyl group; arylcarbonyl groups such as a benzoyl group, a naphthylcarbonyl group, a biphenylcarbonyl group, and an anthranilcarbonyl group; and heteroarylcarbonyl groups such as 2-pyridylcarbonyl group and a thienylcarbonyl group. Among these groups, a C1-C20 acyl group (including a carbonyl group) is preferred, and a C1-C6 acyl group is particularly preferred.

Specific examples of the imidazole compound represented by formula (II) include imidazole, 2-ethyl-4-methylimidazole, 1-methylimidazole, 2-methylimidazole, 4-methylimidazole, 1-benzyl-2-methylimidazole, 2-heptadecylimidazole, 2-undecylimidazole, 2-phenyl-4-methyl-5-hydroxymethylimidazole, 2-phenylimidazole, 2-phenyl-4-methylimidazole, 1-benzyl-2-phenylimidazole, 1,2-dimethylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, and 2-phenyl-4,5-dihydroxymethylimidazole, and imidazole, 2-ethyl-4-methylimidazole, 1-methylimidazole, 2-methylimidazole, 4-methylimidazole, 1-benzyl-2-methylimidazole, 2-heptadecylimidazole, 2-undecylimidazole, 1,2-dimethylimidazole, 2-phenyl-4-methyl-5-hydroxymethylimidazole, 2-phenylimidazole or 2-phenyl-4,5-dihydroxymethylimidazole is preferred.
Examples of the imidazoline compound represented by formula (II) include 2-methylimidazoline, 2-phenylimidazoline, 2-undecylimidazoline, 2-heptadecylimidazoline, 2-ethylimidazoline, 2-i-propylimidazoline, 2,4-dimethylimidazoline, and 2-phenyl-4-methylimidazoline, and 2-methylimidazoline or 2-phenylimidazoline is preferred.

### (Method for Producing Clathrate Complex)

The clathrate complex of the present invention as described above can be produced, for example, by a method described in Japanese unexamined Patent Application Publication No. 2007-39449, and the summary of the method will be described below.
The clathrate complex can be obtained by adding a carboxylic acid compound or a tetrakisphenol compound represented by formula (I) and an imidazole compound or an imidazoline compound represented by formula (II) to a solvent, followed by subjecting the resulting mixture to heat treatment or heating and reflux treatment with optional stirring to precipitate the clathrate complex.
The solvent is not particularly limited unless the solvent interferes with obtaining the compound of the present invention, and examples of the solvent that can be used include water, methanol, ethanol, ethyl acetate, methyl acetate, diethyl ether, dimethyl ether, acetone, methyl ethyl ketone, and acetonitrile. With respect to the proportion of the carboxylic acid compound or the tetrakisphenol compound represented by formula (I) and the imidazole compound or the imidazoline compound represented by formula (II) to be added during the production of the clathrate complex of the present invention, the amount of the imidazole compound or the imidazoline compound represented by formula (II) (guest) is preferably in the range of 0.1 to 5.0 mol, more preferably in the range of 0.5 to 3.0 mol, relative to 1 mol of the carboxylic acid compound or the tetrakisphenol compound represented by formula (I) (host).

The heating condition during the production of the clathrate complex of the present invention is not particularly limited as long as the compound of the present invention can be obtained after dissolving at least the carboxylic acid compound or the tetrakisphenol compound represented by formula (I) and the imidazole compound or the imidazoline compound represented by formula (II) in a solvent followed by heating; the heating temperature can be, for example, in the range of 40 to 120°C, more preferably in the range of 50 to 90°C.
After completion of the reaction, a target clathrate complex can be isolated by a conventional separation means.
The structure of the clathrate complex obtained can be verified by known analytical tools such as NMR, a solid NMR spectrum, an infrared absorption spectrum (IR), a mass spectrum, and an X-ray diffraction (XRD) pattern. The composition of the clathrate complex can be verified by thermal analysis, a ¹H-NMR spectrum, high performance liquid chromatography (HPLC), TG-DTA, elementary analysis, and the like.

### (Epoxy Resin)

Various conventionally known polyepoxy compounds can be used as the epoxy resin without particular limitation as long as they can be used as a powder coating, and examples thereof include the following:
a bisphenol A type epoxy resin, a bisphenol F type epoxy resin, a phenol novolac type or cresol novolak type epoxy resin, a cycloaliphatic epoxy resin, a hydrogenated bisphenol A type or AD type epoxy resin, aliphatic epoxy resins such as propylene glycol diglycidyl ether and pentaerythritol polyglycidyl ether, an epoxy resin obtained from an aliphatic or aromatic carboxylic acid and epichlorohydrin, an epoxy resin obtained from an aliphatic or aromatic amine and epichlorohydrin, a heterocyclic epoxy resin, a spiro ring-containing epoxy resin, and an epoxy-modified resin.
Further, the softening point of the epoxy resin is not particularly limited, but it is preferably in the range of 50 to 160°C, more preferably in the range of 60 to 150°C.

### (Epoxy-Polyester Hybrid Resin)

As an epoxy-polyester hybrid resin, a hybrid in which a polyester resin is blended with an epoxy resin can be used. The polyester resin to be blended may be an epoxy-modified polyester resin and a carboxylic acid-substituted polyester resin in which a part of the structure is substituted with an epoxy group or an aromatic carboxylic acid.
Further, the softening point of the epoxy-polyester hybrid resin is not particularly limited, but it is preferably in the range of 50 to 160°C, more preferably in the range of 60 to 150°C.

Examples of the polyester resin include a polyalkylene terephthalate resin, a polyalkylene naphthalate resin, an unsaturated polyester resin, and an alkyd resin. These polyester resins may be used alone or in combination of two or more thereof.

The polyalkylene terephthalate resin can be obtained, for example, by polycondensation of a glycol such as ethyleneglycol, diethyleneglycol, 1,2-propyleneglycol, 1,3-propanediol, 1,4-butanediol, 1,6-hexanediol, 1,4-cyclohexanedimethanol, and 1,4-cyclohexanediol and terephthalic acid or a terephthalate in the presence of a base catalyst or an acid catalyst. Specific examples thereof include polyethylene terephthalate and polybutylene terephthalate.

The polyalkylene naphthalate resin can be obtained by the polycondensation of the above glycol and a naphthalene dicarboxylic acid such as 1,8-naphthalene dicarboxylic acid or a naphthalene dicarboxylate ester in the presence of a base catalyst or an acid catalyst. Specific examples thereof include polyethylene naphthalate.

The unsaturated polyester resin is a resin obtained by allowing an unsaturated dicarboxylic acid such as maleic acid and fumaric acid, an unsaturated carboxylate ester, or an unsaturated carboxylic anhydride such as phthalic anhydride and maleic anhydride to react with a glycol.

The alkyd resin is a resin obtained by the condensation of three types of compounds, that is, a polyol such as glycerin, pentaerythritol, ethylene glycol, and trimethylolethane, a higher fatty acid such as palmitic acid, and a dibasic acid such as phthalic acid and maleic acid or a dibasic acid anhydride such as phthalic anhydride and maleic anhydride. Specific examples include a glyptal resin.

With respect to the blending amount of the epoxy resin and the polyester resin used in the present invention, the amount of the polyester resin is generally in the range of 1 to 1,000 parts by weight, preferably in the range of 10 to 500 parts by weight, more preferably in the range of 50 to 100 parts by weight, relative to 100 parts by weight of the epoxy resin.

### 2 Production of Curable Powder Coating Composition

The curable powder coating composition of the present invention can be produced by melting and kneading a mixture consisting of a predetermined amount of an epoxy resin, a clathrate complex, and an optional additive under temperature and time conditions in which thickening and gelation do not occur using, for example, a kneader, an extruder, or the like, followed by cooling and then grinding the kneaded mixture, followed by subjecting the ground mixture to a classifier.
A curing agent or a curing accelerator, for example, an amine compound, an imidazole compound, an imidazoline compound, an amide compound, an ester compound, a phenolic compound, an alcohol compound, a thiol compound, an ether compound, a thioether compound, a urea compound, a thiourea compound, a Lewis acid compound, a phosphorus compound, an acid anhydride compound, an onium salt compound, an active silica compound-aluminum complex, and the like may be further added to the curable powder coating composition of the present invention.

Examples of the amine compound to be used include aliphatic amines, alicyclic and heterocyclic amines, aromatic amines, and modified amines.
Examples of the aliphatic amines include ethylenediamine, trimethylenediamine, tetramethylenediamine, hexamethylenediamine, diethylenetriamine, triethylenetetramine, tetraethylenepentamine, dipropylenediamine, dimethylaminopropylamine, diethylaminopropylamine, trimethylhexamethylenediamine, pentanediamine, bis(2-dimethylaminoethyl)ether, pentamethyldiethylenetriamine, alkyl-t-monoamine, 1,4-diazabicyclo(2,2,2)octane(triethylenediamine), N,N,N',N'-tetramethylhexamethylenediamine, N,N,N',N'-tetramethylpropylenediamine, N,N,N',N'-tetramethylethylenediamine, N,N-dimethylcyclohexylamine, dimethylaminoethoxyethoxyethanol, and dimethylaminohexanol.

Examples of the alicyclic and heterocyclic amines include piperidine, piperazine, menthanediamine, isophoronediamine, methylmorpholine, ethylmorpholine, N,N',N''-tris(dimethylaminopropyl)hexahydro-s-triazine, 3,9-bis(3-aminopropyl)-2,4,8,10-tetraoxyspiro(5,5)undecane adduct, N-aminoethylpiperazine, trimethylaminoethylpiperazine, bis(4-aminocyclohexyl)methane, N,N'-dimethylpiperazine, and 1,8-diazabicyclo[5.4.0]-undecene-7.

Examples of the aromatic amines include o-phenylenediamine, m-phenylenediamine, p-phenylenediamine, diaminodiphenylmethane, diaminodiphenylsulfone, benzylmethylamine, dimethylbenzylamine, m-xylenediamine, pyridine, and picoline.
Examples of the modified amines include epoxy compound-added polyamine, Michael-added polyamine, Mannich-added polyamine, thiourea-added polyamine, ketone-blocked polyamine, dicyandiamide, guanidine, organic acid hydrazide, diaminomaleonitrile, aminimide, a boron trifluoride-piperidine complex, and a boron trifluoride-monoethylamine complex.

Examples of the imidazole compounds include imidazole, 2-methylimidazole, 2-ethylimidazole, 2-i-propylimidazole, 2-n-propylimidazole, 2-undecyl-1H-imidazole, 2-heptadecyl-1H-imidazole, 1,2-dimethylimidazole, 2-ethyl-4-methylimidazole, 2-phenyl-1H-imidazole, 4-methyl-2-phenyl-1H-imidazole, 2-phenyl-4-methylimidazole, 1-benzyl-2-methylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 1-cyanoethyl-2-ethyl-4-methylimidazoliumtrimellitate, 1-cyanoethyl-2-undecylimidazoliumtrimellitate, 1-cyanoethyl-2-phenylimidazoliumtrimellitate, 2,4-diamino-6-[2'-methylimidazolyl-(1')]-ethyl-s-triazine, 2,4-diamino-6-(2'-undecylimidazolyl)-ethyl-s-triazine, 2,4-diamino-6-[2'-ethyl-4-imidazolyl-(1')]-ethyl-s-triazine, 2,4-diamino-6-[2'-methylimidazolyl-(1')]-ethyl-s-triazine-isocyanuric acid adduct, 2-phenylimidazole-isocyanuric acid adduct, 2-methylimidazole-isocyanuric acid adduct, 2-phenyl-4,5-dihydroxymethylimidazole, 2-phenyl-4-methyl-5-hydroxymethylimidazole, 1-cyanoethyl-2-phenyl-4,5-di(2-cyanoethoxy)methylimidazole, 1-dodecyl-2-methyl-3-benzylimidazolium chloride, 1-benzyl-2-phenylimidazole hydrochloride, and 1-benzyl-2-phenylimidazolium trimellitate.

Examples of the imidazoline compounds can include 2-methylimidazoline, 2-phenylimidazoline, 2-heptadecylimidazoline, 2-phenyl-4-methylimidazoline, 2-phenylimidazoline, 2-methylimidazoline, and 1,4-tetramethylene-2,2'-bisimidazoline.
Examples of the amide compounds include a polyamide obtained by the condensation of a dimer acid with a polyamine.
Examples of the ester compounds include active carbonyl compounds such as an aryl ester and a thioaryl ester of a carboxylic acid.

Examples of the phenol compounds, alcohol compounds, thiol compounds, ether compounds, and thioether compounds include phenol novolac, cresol novolac, polyol, polymercaptan, polysulfide, 2-(dimethylaminomethylphenol), 2,4,6-tris(dimethylaminomethyl)phenol, and tri-2-ethylhexyl hydrochloride of 2,4,6-tris(dimethylaminomethyl)phenol.
Examples of the urea compounds, thiourea compounds, Lewis acid compounds include a butylated urea, a butylated melamine, a butylated thiourea, and boron trifluoride.

The phosphorus compounds include organic phosphine compounds, for example, alkylphosphines such as ethylphosphine and butyl phosphine; primary phosphines such as phenylphosphine; dialkyl phosphines such as dimethylphosphine and dipropylphosphine; secondary phosphines such as diphenylphosphine and methylethylphosphine; and tertiary phosphines such as trimethylphosphine and triethylphosphine.

Examples of the acid anhydride compounds include phthalic anhydride, hexahydrophthalic anhydride, methyltetrahydrophthalic anhydride, methylhexahydrophthalic anhydride, endomethylenetetrahydrophthalic anhydride, methylendomethylenetetrahydrophthalic anhydride, maleic anhydride, tetramethylenemaleic anhydride, trimellitic anhydride, chlorendic anhydride, pyromellitic anhydride, dodecenylsuccinic anhydride, benzophenone tetracarboxylic acid anhydride, ethyleneglycol bis(anhydrotrimellitate), methylcyclohexene tetracarboxylic acid anhydride, and polyazelaic acid anhydride.

Examples of the onium salt compounds and active silica compound-aluminum complexes include aryldiazonium salts, diaryliodonium salts, triarylsulfonium salts, triphenylsilanol-aluminum complexes, triphenylmethoxysilane-aluminium complexes, silyl peroxide-aluminum complexes, and triphenylsilanol-tris(salicylaldehydato)aluminum complexes.

Resins other than the epoxy resin and the polyester resin may be contained in the curable powder coating composition of the present invention. Examples of other resins include acrylic resin, silicon resin, and polyurethane resin.

Further, other additives can be optionally added to the powder coating composition of the present invention. Other additives include those as described below. The blending amount of these additives is not particularly limited, but can be suitably determined within the limit in which the effect of the present invention can be obtained.
Examples of other additives include: silane coupling agents such as vinyltrimethoxysilane, vinyltriethoxysilane, γ-glycidoxypropyltrimethoxysilane, γ-glycidoxypropyltriethoxysilane, γ-methacryloxypropyltrimethoxysilane, γ-methacryloxypropyltriethoxysilane, γ-aminopropyltrimethoxysilane, γ-aminopropyltriethoxysilane, N-β(aminoethyl)γ-aminopropyltrimethoxysilane, N-β(aminoethyl)γ-aminopropyltriethoxysilane, N-phenyl-γ-aminopropyltrimethoxysilane, N-phenyl-γ-aminopropyltriethoxysilane, γ-mercaptopropyltrimethoxysilane, and γ-mercaptopropyltriethoxysilane; fillers such as calcium bicarbonate, light calcium carbonate, natural silica, synthetic silica, fused silica, kaolin, clay, titanium oxide, barium sulfate, zinc oxide, aluminum hydroxide, magnesium hydroxide, talc, mica, wollastonite, potassium titanate, aluminum borate, sepiolite, and xonotlite; elastomer modifying agents such as NBR, polybutadiene, chloroprene rubber, silicone, crosslinked NBR, crosslinked BR, acrylics, core-shell acrylics, urethane rubber, polyester elastomers, functional group-containing liquid NBR, liquid polybutadiene, liquid polyester, liquid polysulfide, modified silicone, and urethane prepolymers;

flame retardants such as hexabromocyclodecane, bis(dibromopropyl)tetrabromobisphenol A, tris(dibromopropyl)isocyanurate, tris(tribromoneopentyl)phosphate, decabromodiphenyloxide, bis(pentabromo)phenylethane, tris(tribromophenoxy)triazine, ethylene bistetrabromophthalimide, polybromophenylindane, brominated polystyrene, tetrabromobisphenol A polycarbonate, brominated phenylene ethylene oxide, polypentabromobenzyl acrylate, triphenyl phosphate, tricresyl phosphate, trixynyl phosphate, cresyldiphenyl phosphate, xylyldiphenyl phosphate, cresyl bis(di-2,6-xylenyl) phosphate, 2-ethylhexyldiphenyl phosphate, resorcinol bis(diphenyl) phosphate, bisphenol A bis(diphenyl) phosphate, bisphenol A bis(dicresyl) phosphate, resorcinol bis(di-2,6-xylenyl) phosphate, tris(chloroethyl) phosphate, tris(chloropropyl) phosphate, tris(dichloropropyl) phosphate, tris(tribromopropyl) phosphate, diethyl-N,N-bis(2-hydrooxyethyl) aminomethyl phosphonate, aluminum hydroxide treated with oxalate anions, aluminum hydroxide treated with nitrate, aluminum hydroxide treated with high-temperature hot water, hydrated metal compounds surface-treated with stannic acid, magnesium hydroxide surface-treated with nickel compounds, magnesium hydroxide surface-treated with silicone polymers, Procobite, multilayer surface-treated hydrated metal compounds, and magnesium hydroxide treated with cation polymers; engineering plastics such as high-density polyethylene, polypropylene, polystyrene, polymethyl methacrylate, polyvinyl chloride, nylon-6,6, polyacetal, polyethersulfone, polyetherimide, polybutylene terephthalate, polyether ether ketone, polycarbonate, and polysulfone; plasticizers; diluents such as n-butyl glycidyl ether, phenyl glycidyl ether, styrene oxide, t-butylphenyl glycidyl ether, dicyclopentadiene diepoxide, phenol, cresol, and t-butylphenol; extending agents; reinforcing agents; colorants; thickeners; and release agents such as higher fatty acid, higher fatty acid ester, and higher fatty acid calcium, for example, carnauba wax and polyethylene wax.

### 3 Cured Product

The cured product of the curable powder coating composition of the present invention includes a cured film obtained, for example, by applying or coating the present composition to a substrate.
The coating can be performed by a known coating method.

Examples of the coating method include an electrostatic powder coating method, an uncharged powder coating method, a triboelectric powder coating method, and a fluidization dip coating method. In any coating method, a favorable cured coating film can be formed at a low heating temperature if the curable powder coating composition of the present invention is used.
The curable powder coating composition of the present invention is excellent in storage stability because curing reaction hardly proceeds even if it is stored over a long period of time.

After the curable powder coating composition of the present invention is applied to a substrate, the guest component (the imidazole compound or imidazoline compound represented by formula (II)) in the clathrate complex is quickly released from the host component by heating, and the released imidazole compound or imidazoline compound represented by formula (II) is crosslinked with an epoxy resin or acts as a catalyst to promote a curing reaction, thereby capable of forming a cured coating film.
The thickness of the coating film obtained is not particularly limited, but it is generally in the range of about 20 to 200 µm, preferably in the range of 40 to 100 µm.
Heating of the coating film can release the imidazole compound or imidazoline compound represented by formula (II) included in the clathrate complex to allow a curing reaction to proceed to form a cured film.

Further, according to the curable powder coating composition of the present invention, it is necessary to set the temperature to form a cured film to a higher temperature than in the case where the imidazole compound or imidazoline compound represented by formula (II) is not included, but it is possible to form a cured film at a lower temperature as compared with a conventional high-temperature-curing type curing agent. Therefore, the curable powder coating composition of the present invention can be applied even to a substrate having poor heat resistance and can form a favorable cured coating film.

Further, it is preferred to select a more favorable curing agent and/or curing accelerator in order to form a favorable curable powder coating composition and a favorable cured film. The more favorable curing agent and/or curing accelerator can be used by suitably selecting the clathrate complex according to a required effect. Specifically, although gel time is preferably shorter to improve the low-temperature curability, too short gel time may cause an external appearance defect such as unevenness on the surface of a coating film to occur and the surface uniformity and smoothness to be impaired. On the other hand, curing will be insufficient if the gel time is too long. Therefore, the gel time is preferably 1 min or more and 30 min or less, more preferably 3 min or more and 20 min or less at a target heat-curing temperature. When it is required that the tint of the coated surface after curing of the powder coating is favorable, the whiteness degree is preferably as high as possible. When it is required that the glossiness of the coated surface after curing of the powder coating is favorable, the glossiness is preferably as high as possible, and the change in the glossiness between the initial value and a value after storage is preferably as small as possible. Further, when the coated surface after curing of the powder coating is used in the environment where it is exposed to an organic solvent, the solvent resistance is preferably as high as possible.

The heating temperature for obtaining a cured film is generally in the range of 20 to 300°C, preferably in the range of 50 to 150°C.
The powder coating composition of the present invention can be suitably used as a coating for the surface coating of a substrate such as a tree, plywood, a plastic, metal, and a combination thereof, and in the field of household electrical appliances, building materials, water pipes, pipelines, automobile parts, and the like.
Specifically, the powder coating composition of the present invention can be suitably used as a coating for applications such as decoration or anticorrosion of cellular phones, batteries, parts for electricity, and electric appliances, decoration or anticorrosion of steel or wooden furniture, coating of piping or connection parts in water supply, sewage, or the like, decoration or anticorrosion of guardrails, traffic signs such as signals, roofs or outer walls of buildings and the like, decoration or anticorrosion of toys, trophies or display boards, chairs, racks, carts, and parts, cages, or the like for motor vehicles, motorcycles, bicycles, and the like.

### Examples

Hereinafter, the present invention will be described with reference to Examples, but the technical scope of the present invention is not intended to be limited to these Examples.
Note that the definitions of abbreviations are as follows.

### (Host molecule)

NIPA: 5-nitroisophthalic acid
HIPA: 5-hydroxyisophthalic acid
TEP: 1,1,2,2-tetrakis(4-hydroxyphenyl)ethane
TMLA: 1,2,4-benzenetricarboxylic acid (trimellitic acid)
TMSA: 1,3,5-benzenetricarboxylic acid (trimesic acid)
TPTA: terephthalic acid
IPTA: isophthalic acid
SUCA: succinic acid
(Guest molecule)
2E4MZ: 2-ethyl-4-methylimidazole
1MZ: 1-methylimidazole
2MZ: 2-methylimidazole
4MZ: 4-methylimidazole
1,2DMZ: 1,2-dimethylimidazole
2MZL: 2-methylimidazoline
Im: imidazole
The notation of the clathrate complex is described in the order of a host compound-a guest compound, and the inclusion ratio (molar ratio) of the guest compound to the host compound is described in the parenthesis to follow.
For example, "TEP-2E4MZ (1:1)" means a clathrate complex in which the host compound is TEP; the guest compound is 2E4MZ; and the inclusion ratio is 1:1.

### 1 Preparation of Curable Powder Coating Composition

A clathrate complex (1.5 parts by weight as imidazole), titanium oxide, and a surface control agent in an amount as shown in Table 1 were sufficiently mixed with 100 parts by weight of an epoxy resin in a Mill TML17 (manufactured by TESCOM & Co., Ltd.). Then, the mixture was melt-kneaded for 5 min with a mixing roll mill MR-3 1/2×8 (manufactured by Inoue Manufacturing Co., Ltd.) in which the roll surface temperature was heated to 100°C. Subsequently, the kneaded mixture was cooled to room temperature and then subjected to coarse grinding with a High-Speed Stamp Mill ANS-143PL (manufactured by NITTO KAGAKU Co., Ltd.), followed by putting the ground kneaded mixture through a sieve having openings of 1 mm. Finally, the coarse particles were subjected to air flow grinding using ULMAX (registered trademark, manufactured by Nisso Engineering Co., Ltd.) and put through a sieve having openings of 106 µm to obtain a powder coating.

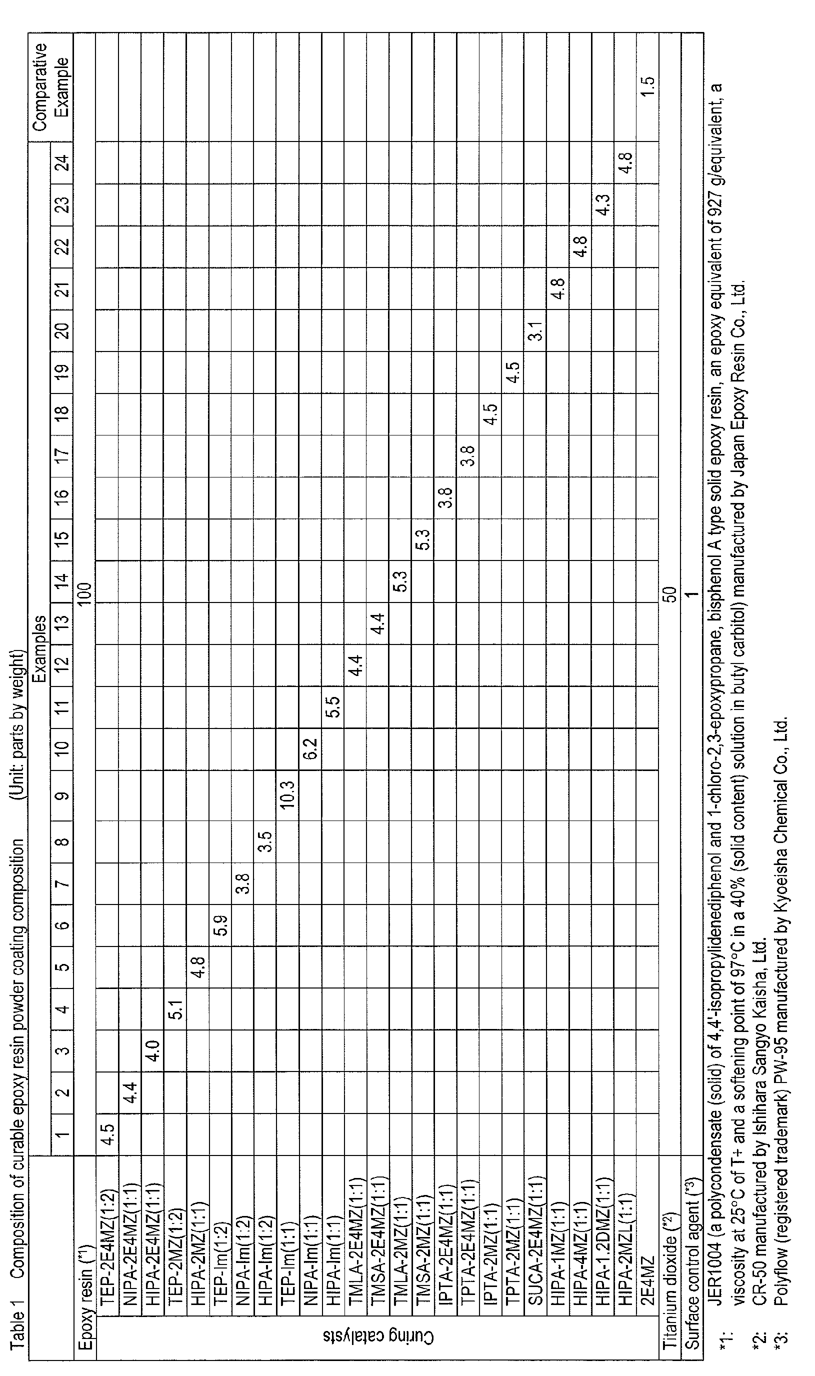

### 2 Measurement of Gel Time of Curable Powder Coating Composition

A suitable amount of the curable powder coating composition of each Example was placed on a 130°C hot plate with a metal spatula and stirred with the metal spatula, and the time when the sample has lost adhesiveness was measured. The results are shown in Table 2 together with the results in the case where a 150°C hot plate was similarly used for the measurement.

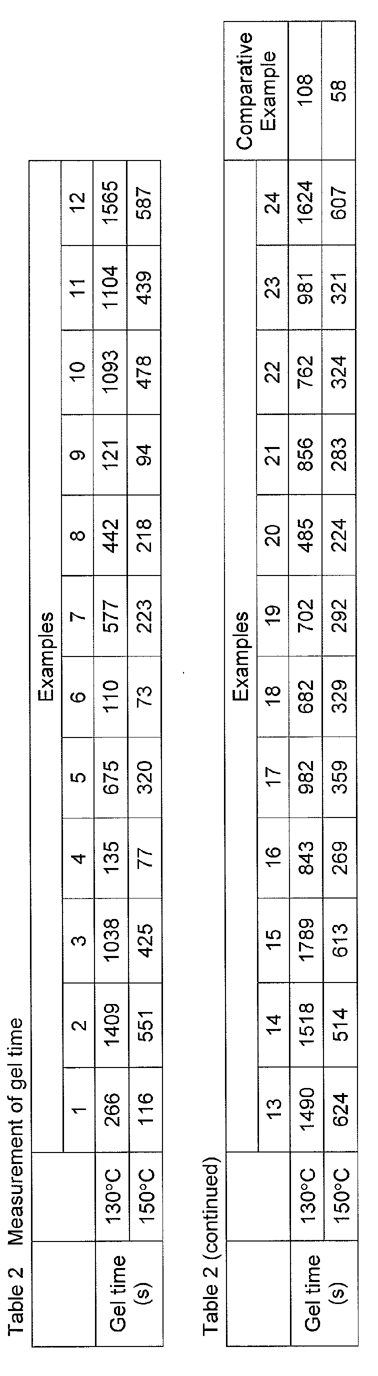

### 3 Coating and Test of Curable Powder Coating Composition

Each of the curable powder coating compositions obtained in Examples 1 to 24 and Comparative Example was applied to a zinc phosphate-treated steel sheet having a dimension of 0.8 x 70 x 150 mmφ 5-1 (with a hole for hanging), product name SPCC-SB (PB-L3020) (manufactured by Paltec Test Panels Co., Ltd.), by electrostatic spray coating using a corona type hand spray coater (manufactured by Wagner Co., Ltd.) so that a cured film might have a thickness of 40 to 60 µm. Then, the test pieces were each charged into a drying oven set to 130°C for 15 min and heated to obtain a coating film. The thus-obtained coating films were each evaluated for the following performance, and the results are shown in Table 3.
Further, the coating films obtained by coating, followed by charging into a drying oven set to 150°C for 20 min, were similarly tested, and the results are shown in Table 4.

### (Evaluation of Gloss)

The coating films were each measured for the 20-degree and 60-degree specular gloss according to JIS K 5600-4-7 using a gloss meter (GMX-202, manufactured by Murakami Color Research Laboratory Co., Ltd.).

### (Evaluation of External Appearance)

The coating films were each evaluated for the external appearance by visual observation according to 4.4 of JIS K 5600-1-1, and those in which pinholes, blisters, peeling, cracks, wrinkles, irregular color, and the like are not observed were rated as Excellent; those in which extremely small abnormalities are observed were rated as Good; and those having abnormalities were rated as Poor.

### (Adhesion test)

The test was performed according to a method according to JIS K 5600-5-6 (a crosscut method). The classification of the test results was shown according to the evaluation points of the cross-cut adhesion test described in JIS.

### (Scratch Hardness Test)

Scratch hardness was measured according to a method described in JIS K 5600-5-4 (scratch hardness (pencil method)). The results were indicated by pencil hardness symbols.

### (Solvent Resistance Test)

Glass surfaces on which a powder coating was baked were each reciprocatingly rubbed 10 times with Kimwipe S200 (manufactured by Nippon Paper Crecia, Co., Ltd.) containing methyl ethyl ketone (MEK) or ethyl acetate (AcOEt), and the resulting appearance of the glass surfaces was observed. Those showing no change were rated as A; those showing a little transfer of the coating to Kimwipe were rated as B; those showing much transfer of the coating to Kimwipe were rated as C; those in which the surface has deformed were rated as D; and those dissolved in a solvent were rated as E.

### (Measurement of Whiteness Degree and Color Value)

The whiteness degree (WB value, JIS P8123) and the color value (L*, a*, b*) which were measured with type SD5000, manufactured by Nippon Denshoku Industries Co., Ltd. were shown. The whiteness degree (WB value) indicates that the larger the numerical value, the higher the whiteness degree.

### (Impact Resistance Test)

A weight of 500 g and an impact core of 1/2 inch was dropped on the surface of each coating film according to DuPont type impact test of JIS K 5600-5-3, and the height (cm) of the weight that does not cause a crack and peeling in the coating film was shown.

### (Smoothness)

The smoothness was evaluated by finger touch and visual observation of the surface of each cured product: Poor: a surface where nonuniformity and significant irregularity of coating film are observed; Good: a surface where irregularity is hardly felt; and Excellent: a surface where irregularity is not felt at all.

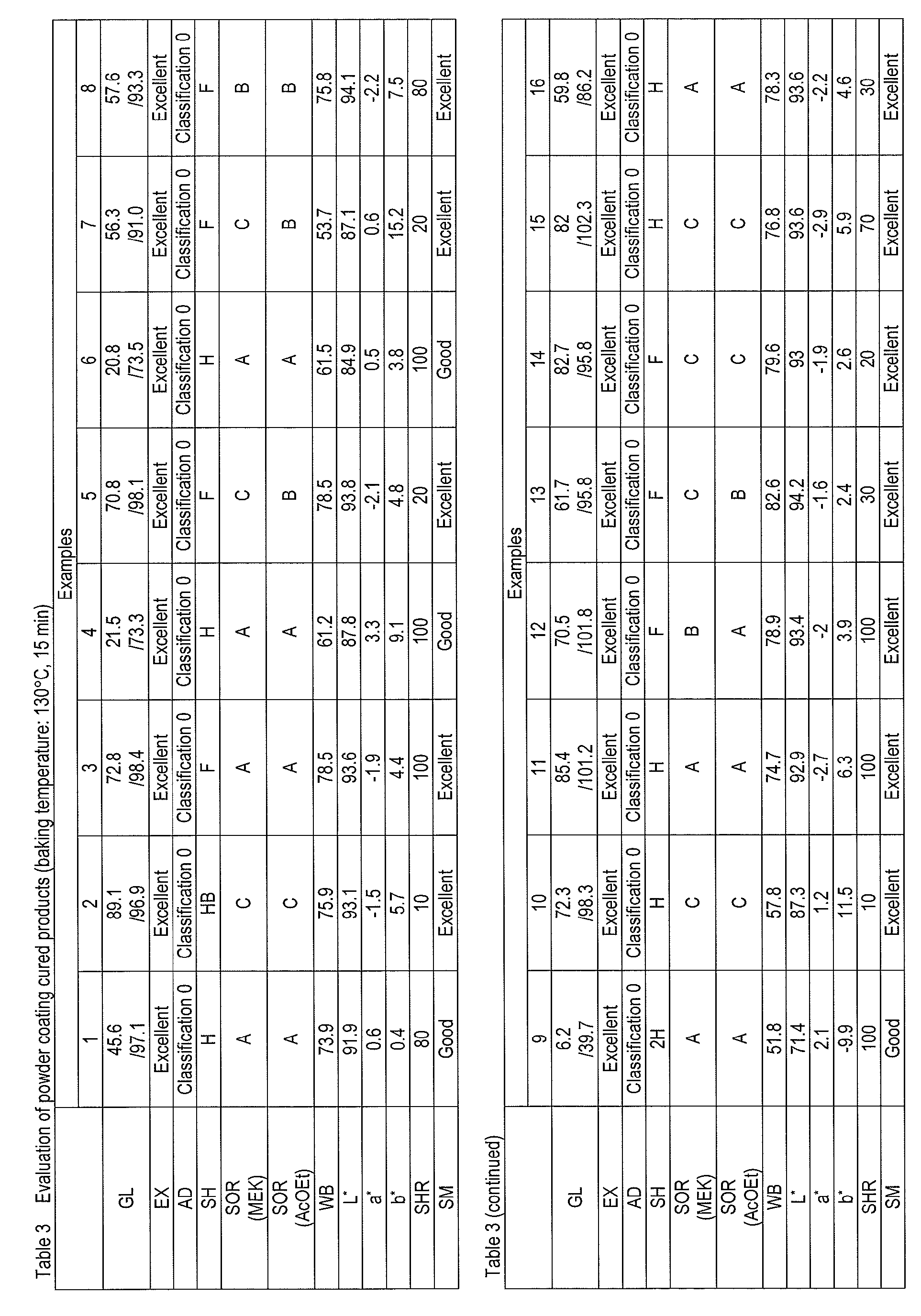

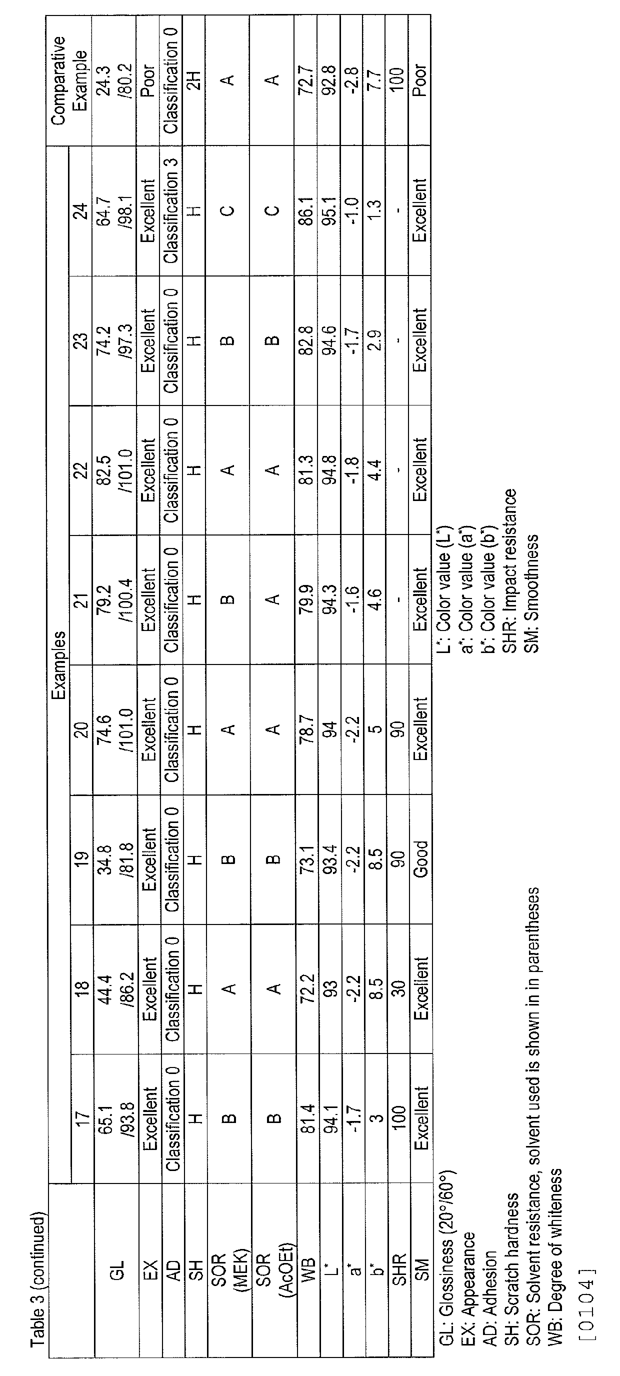

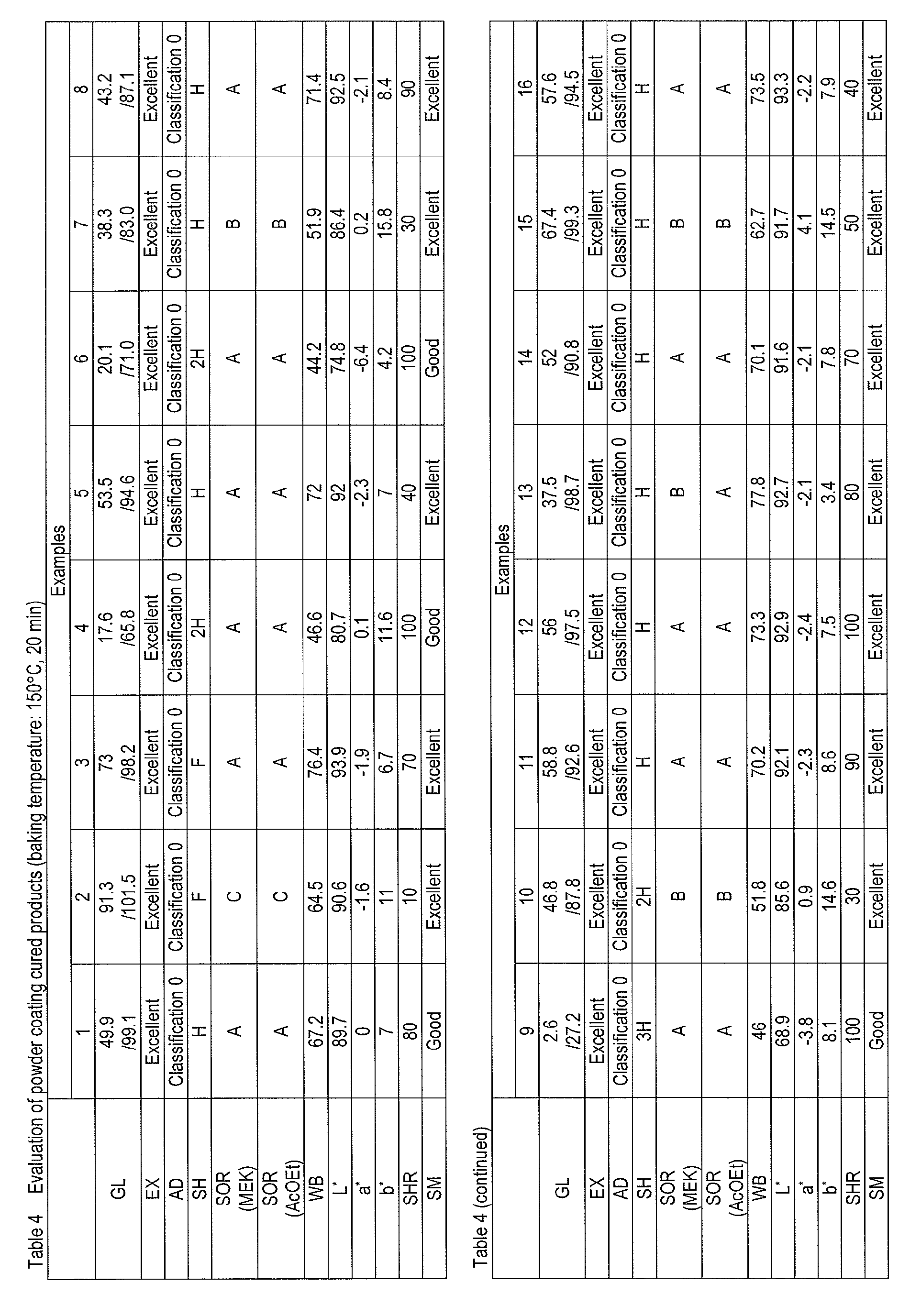

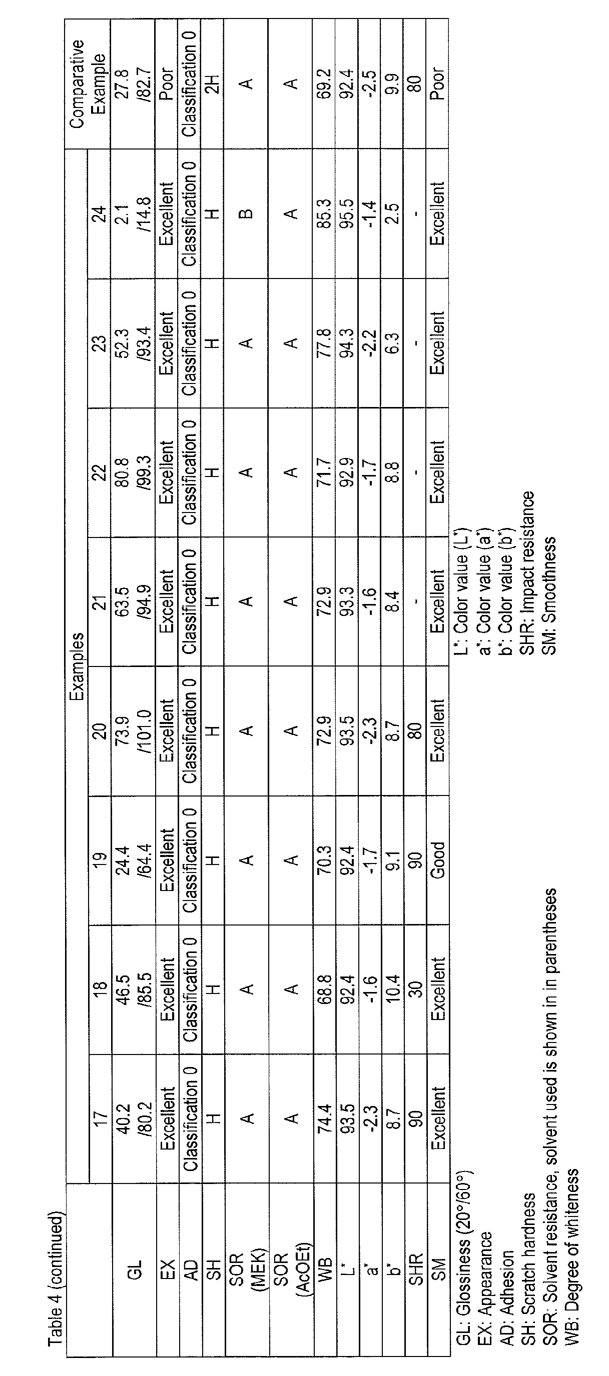

### 4 Evaluation of Storage Stability

The curable powder coating compositions of Examples 1 to 24 and Comparative Example were stored at 40°C for 40 days, and the stored compositions were used for the measurement of gel time in the same manner as in the above 2. The results are shown in Table 5 together with the results of the composition before storage.
Further, the curable powder coating compositions of Examples 1 to 24 and Comparative Example were stored at 40°C for 40 days, and the stored compositions were used for coating and baking in the same conditions as in the above 3. The resulting samples were tested in the same manner. The results of baking at 130°C for 15 min and baking at 150°C for 20 min are shown in Tables 6 and 7, respectively, together with the results of the baking of the compositions before storage.

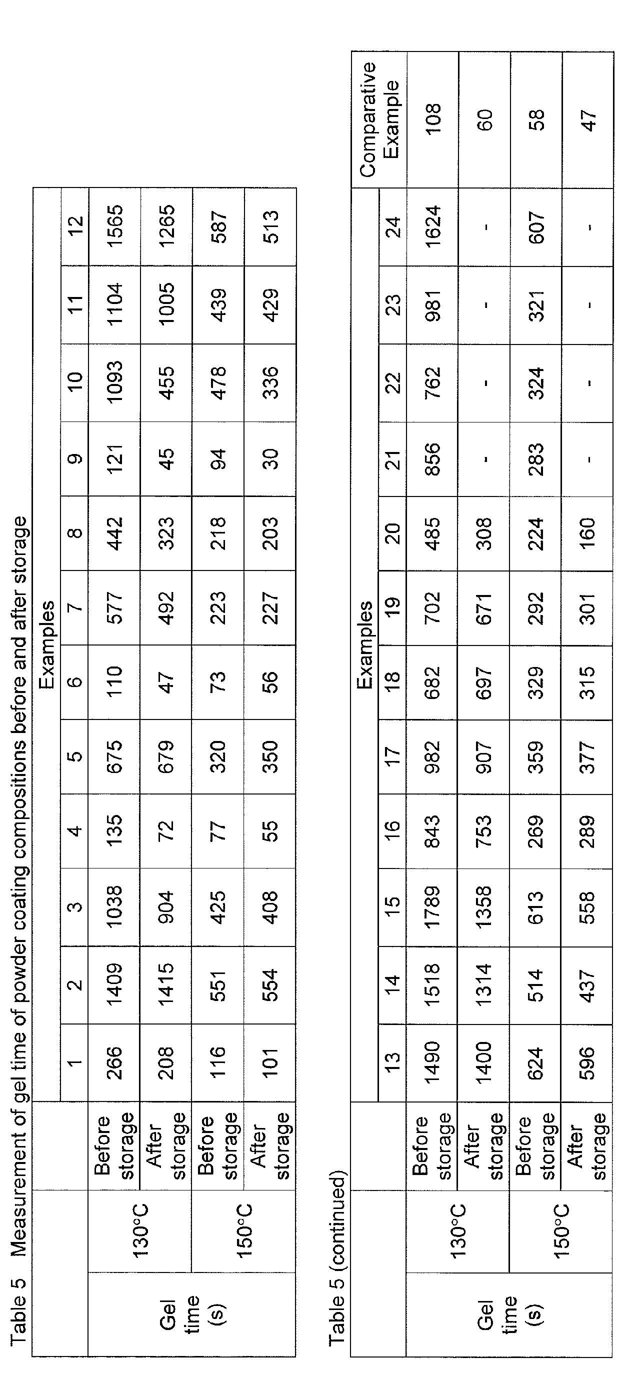

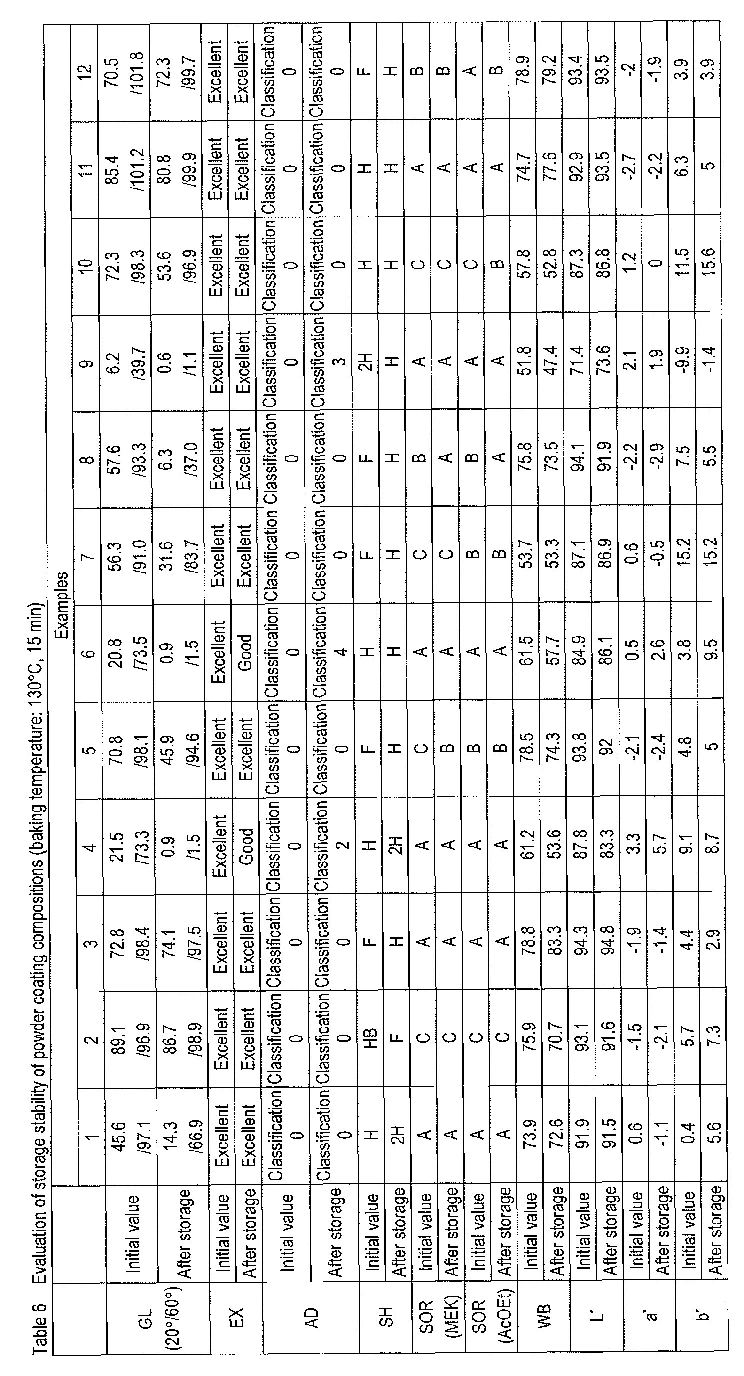

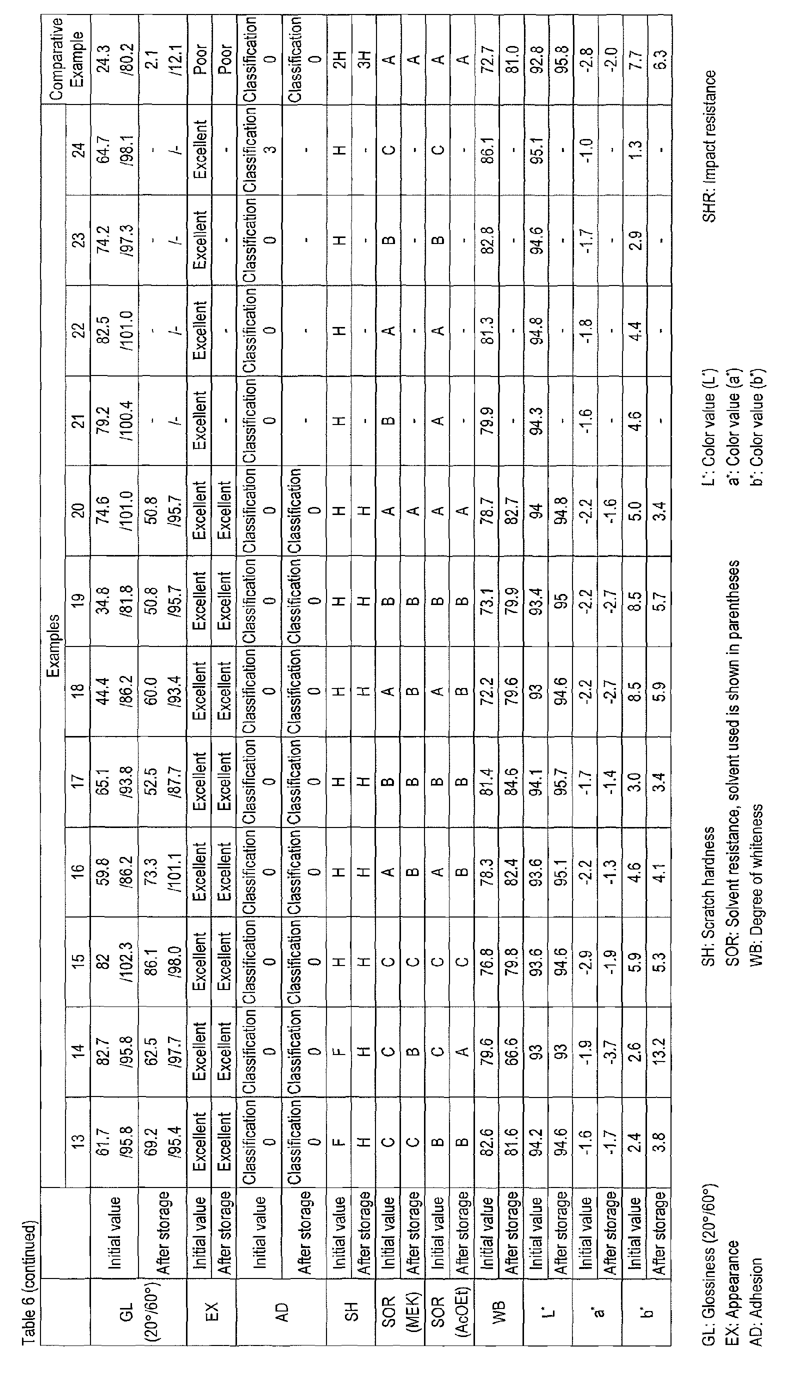

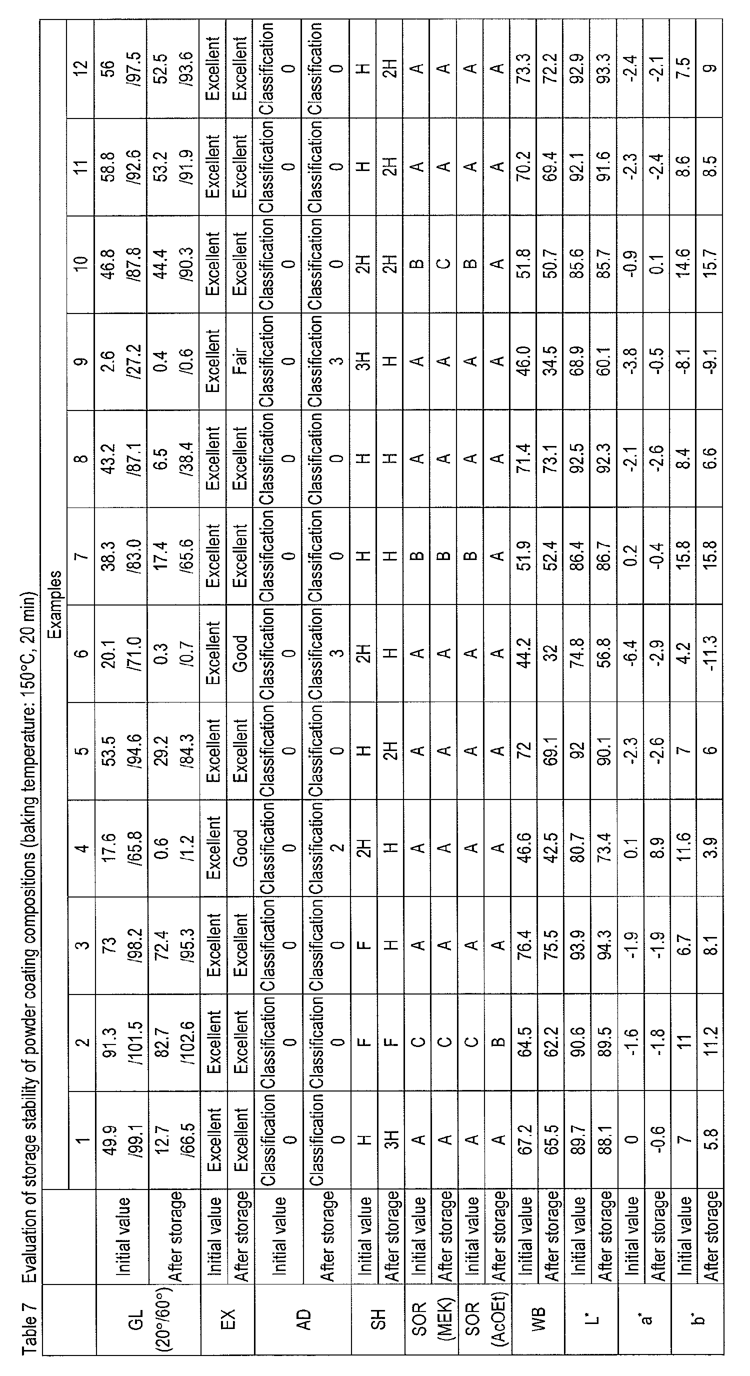

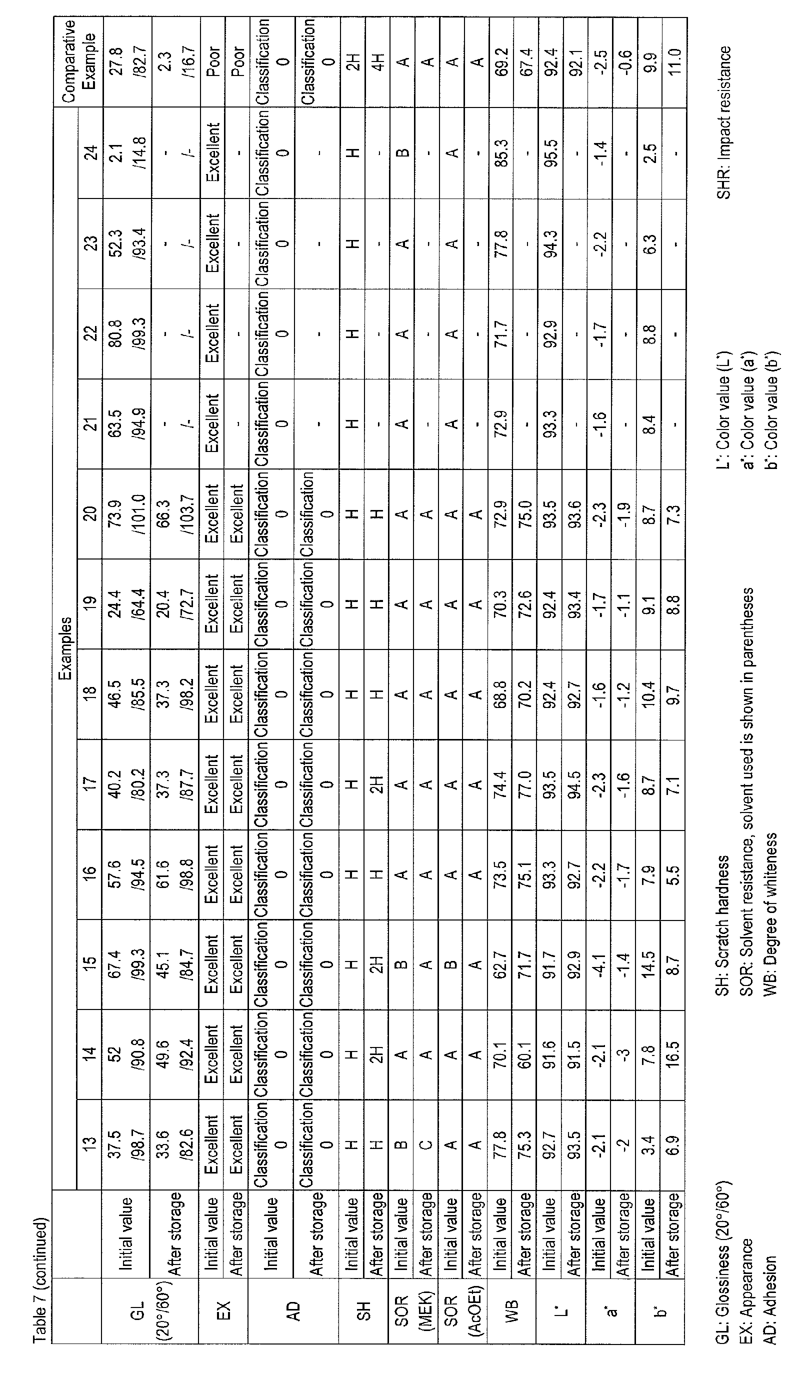

### 5 Summary of Results

The results of storage stability in Table 5 have revealed that since the curable powder coating compositions of the present invention each have a longer gel time as compared with the composition of Comparative Example, the inventive compositions maintain fluidity during heat-curing and, as a result, provide a coating film excellent in uniformity and smoothness. The results have also revealed that the inventive compositions are compositions having good storage properties because they show a smaller change in gel time after storage at 40°C for 40 days as compared with the composition of Comparative Example. In particular, when a clathrate complex containing an aromatic carboxylic acid such as HIPA and NIPA was used, the effect was outstanding.
The results of glossiness and whiteness degree in Table 6 have revealed that the cured products of the curable powder coating compositions of the present invention each have high glossiness and whiteness degree values and a favorable surface. In particular, when a clathrate complex containing an aromatic carboxylic acid such as HIPA and NIPA and an aliphatic carboxylic acid such as succinic acid was used, the effect was outstanding. Further, a film having smoothness can be easily prepared from an organic solvent type coating by controlling the type of the organic solvent or its concentration, but it has been possible to prepare a film having a glossiness, whiteness, or smoothness as described above even from a solventless composition, which represents the superiority of the composition of the present invention. Note that no particular problem arises even if the composition of the present invention contains an organic solvent.
The results of impact resistance in Tables 3 and 4 have revealed that the cured product of the curable powder coating composition using a clathrate complex containing a tetrakisphenol compound such as TEP and an unsubstituted imidazole (Im) provides a favorable result in that it has higher adhesiveness with a substrate metal and mechanical impact than in the case of using a clathrate complex containing TEP and 2E4MZ.
Further, the results in Table 4 have revealed that the cured products of the curable powder coating compositions of the present invention have a matte effect because they have a low glossiness and provide favorable results in appearance and smoothness. Example 24 is particularly excellent.

### Industrial Applicability

Conventional low-temperature curing powder coatings can be cured at low temperatures. They have high reactivity, but have insufficient storage properties and need to be stored at low temperatures. Further, some compositions can start curing at low temperatures, but may cause half-baked curing. However, in the curable powder coating composition of the present invention, a clathrate complex is used for a curing agent and/or a curing accelerator and, as a result, curing proceeds by the release of a guest compound from the clathrate complex at a certain temperature. Therefore, the composition can be stably stored at this temperature or lower and uniformly cured at this temperature or higher. Furthermore, this temperature can be selected by suitably combining a host compound and a guest compound.
With respect to conventional low-temperature curing powder coatings, the molten resin viscosity increases with heat-curing, leading to the loss of fluidity. Therefore, the coated surface of the resulting cured film will have poor smoothness because the coating powder is cured as it is sprayed by spraying or the like. However, in the curable powder coating composition of the present invention, a uniform and smooth coated surface of cured film is obtained because the curing does not immediately start by heating, but the fluidity first increases and then the curing starts.
Further, in the resin melt kneading during the production of a coating, if the resin melt kneading is performed in the temperature range of the melting temperature of an epoxy resin or higher and the curing starting temperature of an inclusion catalyst or lower, the resin kneading operation will be possible without being accompanied by curing and increased viscosity during the kneading. Consequently, the resulting kneaded composition will have better resin dispersibility and can be expected to have improved handleability and productivity.
The same effect can be expected in the case where a high-temperature curing coating is cured at high temperatures, but the high-temperature curing cannot be applied to a substrate weak in temperature, a substrate which has high thermal conductivity and cannot be heated to a high temperature, or a substrate which has poor thermal conductivity and cannot be uniformly heated to a high temperature. Thus, the curable powder coating composition of the present invention is very useful because it can be cured at low temperatures, has good storage properties, and has a smooth coated surface.
Note that although a smooth coating film surface can be produced by using an organic solvent type coating and a thermoplastic powder coating, the organic solvent type coating is required to recover an organic solvent during the heat-curing because it uses an organic solvent, and the thermoplastic powder coating has disadvantages such that it is remelted by re-heating or has a relatively low coating hardness.
Further, the curable powder coating composition of the present invention can form a coated surface which is smooth but has very small irregularities by suitably combining a host compound and a guest compound. Therefore, the coated surface can be used as a surface having antiglare properties, non-glare properties, or a matte effect.
The cured product of the curable powder coating composition of the present invention includes a favorable cured coating film excellent in physical properties such as substrate adhesion and is also characterized by a high whiteness degree, although the composition has low-temperature curability. Therefore, it is possible to suitably select a cured product having suitable characteristics depending on the purpose.

## Claims

1. A curable powder coating composition containing the following components (A) and (B):
(A) an epoxy resin or an epoxy-polyester hybrid resin; and
(B) a clathrate complex which contains (b1) at least one selected from the group consisting of a carboxylic acid compound and a tetrakisphenol compound represented by the following formula (I): 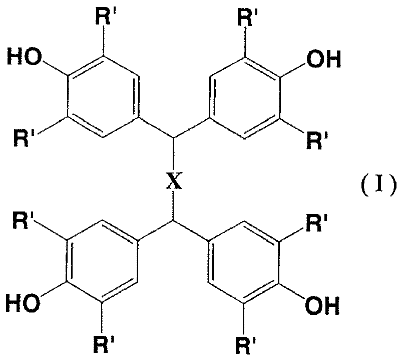 (wherein X represents (CH₂)ₙ, n representing 0, 1, 2, or 3; and R' each independently represents a hydrogen atom, a C1-C6 alkyl group, a phenyl group which optionally has a substituent, a halogen atom, or a C1-C6 alkoxy group) and (b2) at least one selected from compounds represented by formula (II): 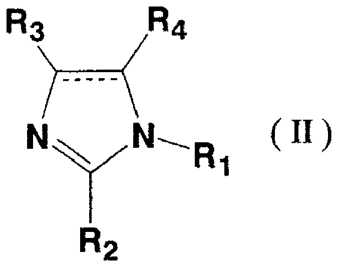 (wherein R₁ represents a hydrogen atom, a C1-C10 alkyl group, an aryl group, an arylalkyl group, or a cyanoethyl group; R₂ to R₄ each represent a hydrogen atom, a nitro group, a halogen atom, a C1-C20 alkyl group, a C1-C20 alkyl group substituted with a hydroxy group, an aryl group, an arylalkyl group, or a C1-C20 acyl group; and a dashed line part represents a single bond or a double bond).

2. The curable powder coating composition according to claim 1, wherein the carboxylic acid compound in (b1) is an aromatic carboxylic acid compound.

3. The curable powder coating composition according to claim 2, wherein the aromatic carboxylic acid compound is an isophthalic acid compound represented by formula (III): 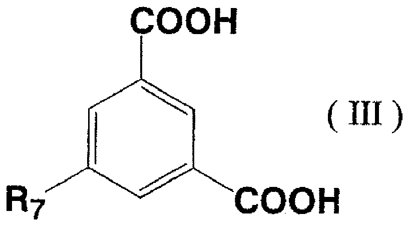 (wherein R₇ represents a C1-C6 alkyl group, a C1-C6 alkoxy group, a nitro group, or a hydroxy group).

4. The curable powder coating composition according to claim 3, wherein the isophthalic acid compound is 5-t-butyl isophthalic acid, 5-nitroisophthalic acid, or 5-hydroxyisophthalic acid.

5. The curable powder coating composition according to any one of claims 1 to 4, wherein the imidazole compound or the imidazoline compound represented by formula (II) represents imidazole, 2-ethyl-4-methylimidazole, 1-methylimidazole, 2-methylimidazole, 4-methylimidazole, 1,2-dimethylimidazole, 1-benzyl-2-methylimidazole, 2-heptadecylimidazole, 2-undecylimidazole, 2-phenylimidazole, 2-phenyl-4-methyl-5-hydroxymethylimidazole, 2-methylimidazoline or 2-phenylimidazoline.

6. A cured product of the curable powder coating composition according to any one of claims 1 to 5.
